(19)

Europäisches
Patentamt
European
Patent Office
Office européen
des brevets

(11) **EP 3 007 075 A2**

(12) **EUROPEAN PATENT APPLICATION**

(43) Date of publication:
**13.04.2016 Bulletin 2016/15**

(51) Int Cl.:
**G06F 17/18** $^{(2006.01)}$

(21) Application number: **15186422.0**

(22) Date of filing: **23.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **25.09.2014 JP 2014195026**

(71) Applicant: **Seiko Epson Corporation**
**Tokyo 163 (JP)**

(72) Inventors:
• **Kurasawa, Hikaru**
  **Nagano, 392-8502 (JP)**
• **Arai, Yoshifumi**
  **Nagano, 392-8502 (JP)**

(74) Representative: **Hoffmann Eitle**
**Patent- und Rechtsanwälte PartmbB**
**Arabellastraße 30**
**81925 München (DE)**

(54) **CALIBRATION CURVE CREATION METHOD AND DEVICE, TARGET COMPONENT CALIBRATION METHOD AND DEVICE, AND ELECTRONIC APPARATUS**

(57) A calibration curve creation method includes a step of obtaining an independent component matrix including independent components of each sample, and this step includes a step of obtaining the independent component matrix by performing a first preprocess including normalization of the observation data, a second preprocess including whitening, and independent component analysis in this order. In the first preprocess, normalization is performed after a process based on project on null space (PNS) is performed. In the PNS, as a single-variable function representing a variation which depends on an ordinal number $\lambda$ (where $\lambda$ is an integer from 1 to N) of a data length N of the observation data, not a power function of $\lambda$ with an exponent of an integer but a single-variable function which monotonously increases according to an increase in $\lambda$ in a range of the value of $\lambda$ from 1 to N is used.

FIG. 5

EP 3 007 075 A2

**Description**

BACKGROUND

1. Technical Field

The present invention relates to a technique of creating a calibration curve which is used to derive a content of a target component for a test object from observation data of the test object, and a technique of obtaining the content of the target component for the test object.

2. Related Art

In the related art, the present inventor has proposed that independent component analysis is used to create a calibration curve of a target component and to calibrate the target component using the calibration curve. For example, in JP-A-2013-160574, independent component analysis is performed on observation data of a plurality of samples whose components are known during creation of a calibration curve, and a single regression calibration curve is determined on the basis of a relationship between a mixing ratio of the obtained independent component and a known content amount of a target component. When calibrating the target component, calibration of the target component is performed on the observation data for an object sample whose component amount is unknown, by using the independent component and the calibration curve obtained during the creation of the calibration curve. In the creation of the calibration curve or the calibration of the target component, project on null space (hereinafter, abbreviated to PNS) is performed as preprocess on the observation data so as to reduce the influence of a baseline variation included in the observation data, thereby increasing calibration accuracy.

In the above-described PNS disclosed in JP-A-2013-160574, a power function $\lambda^g$ with an exponent g of an integer is used as a function representing wavelength-dependency of the variation. However, the present inventor has found that there is a case where a variation may occur which cannot be sufficiently removed only by a power function with an exponent of an integer in an actual process and thus the method is insufficient.

SUMMARY

An advantage of some aspects of the invention is to solve at least a part of the problems described above, and the invention can be implemented as the following forms or application examples.

(1) A first aspect of the invention provides a calibration curve creation method of creating a calibration curve used to derive a content of a target component for a test object from observation data of the test object. The calibration curve creation method includes obtaining an independent component matrix including independent components of each sample, and, in this case, the independent component matrix is obtained by performing a first preprocess including normalization of the observation data, a second preprocess including whitening, and independent component analysis in this order. In the first preprocess, normalization is performed after a process based on project on null space (PNS) is performed. In the PNS, as a single-variable function representing a variation which depends on an ordinal number $\lambda$ (where $\lambda$ is an integer from 1 to N) of a data length N of the observation data, not a power function of $\lambda$ with an exponent of an integer but a single-variable function which monotonously increases according to an increase in $\lambda$ in a range of the value of $\lambda$ from 1 to N is used.

In the method, since, in the PNS, not a power function of $\lambda$ with an exponent of an integer but a single-variable function which monotonously increases according to an increase in $\lambda$ in a range of the value of $\lambda$ from 1 to N is used, it is possible to reduce the influence of a baseline variation included in the observation data more than in the related art and thus to increase calibration accuracy.

In one embodiment, the calibration curve creation method includes (a) causing a computer to acquire the observation data for a plurality of samples of the test object; (b) causing the computer to acquire a content of the target component for each sample; (c) causing the computer to estimate a plurality of independent components obtained when the observation data of each sample is separated into the plurality of independent components, and to obtain a mixing coefficient corresponding to the target component for each sample on the basis of the plurality of independent components; and (d) causing the computer to obtain a regression formula of the calibration curve on the basis of the content of the target component of the plurality of samples and the mixing coefficient for each sample. The above (c) includes (i) causing the computer to obtain an independent component matrix including the independent components of each sample; (ii) causing the computer to obtain an estimated mixing matrix indicating a set of vectors for defining a ratio of an independent component element for each independent component in each sample on the basis of the independent component matrix; and (iii) causing the computer to obtain a correlation of the content of the target component of the plurality of samples for each vector included in the estimated mixing matrix, and to select the vector which is determined as having the highest correlation as a mixing coefficient corresponding to the target component. In the above (i), the computer obtains the independent component matrix by performing a first preprocess including normalization of the observation data, a second preprocess including whitening, and independent component analysis in this order. In the first preprocess, the computer performs the normalization after a process based on project on null space (PNS) is performed, and, in the PNS, the computer uses, as a single-variable function representing a variation which depends on an ordinal number $\lambda$ (where $\lambda$ is an integer from 1 to N) of a data length N of the observation data, not a power function of $\lambda$ with an exponent of an integer but a single-variable function which monotonously increases according to an increase in $\lambda$ in a range of the value of $\lambda$ from 1 to N.

According to this calibration curve creation method, the calibration curve for deriving a target component amount contained in the test object from the observation data of the test object is created on the basis of the observation data and the content of the target component acquired from each sample for a plurality of samples of the test object. For this reason, if the calibration curve is used, it is possible to obtain the content of the target component with high accuracy even if only a single observation data item of the test object is used. Therefore, if a calibration curve is created in advance according to the calibration curve creation method, a single observation data item has only to be obtained for a test object during calibration. As a result, a target component amount can be obtained with high accuracy on the basis of a single observation data item which is an actually measured value. Since the estimated mixing matrix is obtained, and a vector having the strong correlation with a content of the target component of the sample is extracted from the estimated mixing matrix, it is possible to obtain a mixing coefficient having high estimation accuracy. In the first preprocess, since the process based on the PNS is performed, it is possible to reduce the influence of a baseline variation included in the observation data and thus to increase calibration accuracy.

(2) A second aspect of the invention provides a calibration curve creation device which creates a calibration curve used to derive a content of a target component for a test object from observation data of the test object. The calibration curve creation device includes an independent component matrix calculation unit that obtains an independent component matrix including independent components of each sample. The independent component matrix calculation unit obtains the independent component matrix by performing a first preprocess including normalization of the observation data, a second preprocess including whitening, and independent component analysis in this order. In the first preprocess, normalization is performed after a process based on project on null space (PNS) is performed. In the PNS, as a single-variable function representing a variation which depends on an ordinal number $\lambda$ (where $\lambda$ is an integer from 1 to N) of a data length N of the observation data, not a power function of $\lambda$ with an exponent of an integer but a single-variable function which monotonously increases according to an increase in $\lambda$ in a range of the value of $\lambda$ from 1 to N is used.

In the calibration curve creation device, since, in the PNS, not a power function of $\lambda$ with an exponent of an integer but a single-variable function which monotonously increases according to an increase in $\lambda$ in a range of the value of $\lambda$ from 1 to N is used, it is possible to reduce the influence of a baseline variation included in the observation data more than in the related art and thus to increase calibration accuracy.

In one embodiment, the calibration curve creation device includes a sample observation data acquisition section that acquires the observation data for a plurality of samples of the test object; a sample target component amount acquisition section that acquires a content of the target component for each sample; a mixing coefficient estimation section that estimates a plurality of independent components obtained when the observation data of each sample is separated into the plurality of independent components, and to obtain a mixing coefficient corresponding to the target component for each sample on the basis of the plurality of independent components; and a regression formula calculation section that obtains a regression formula of the calibration curve on the basis of the content of the target component of the plurality of samples and the mixing coefficient for each sample. The mixing coefficient estimation section includes an independent component matrix calculation unit that obtains an independent component matrix including the independent components of each sample; an estimated mixing matrix calculation unit that obtains an estimated mixing matrix indicating a set of vectors for defining a ratio of an independent component element for each independent component in each sample on the basis of the independent component matrix; and a mixing coefficient selection unit that obtains a correlation of the content of the target component of the plurality of samples for each vector included in the estimated mixing matrix, and to select the vector which is determined as having the highest correlation as a mixing coefficient corresponding to the target component. The independent component matrix calculation unit obtains the independent component matrix by performing a first preprocess including normalization of the observation data, a second preprocess including whitening, and independent component analysis in this order. In the first preprocess, the independent component matrix calculation unit performs the normalization after a process based on project on null space (PNS) is performed. In the PNS, the independent component matrix calculation unit uses, as a single-variable function representing a variation which depends on an ordinal number $\lambda$ (where $\lambda$ is an integer from 1 to N) of a data length N of the observation data, not a power function of $\lambda$ with an exponent of an integer but a single-variable function which monotonously increases according to an increase in $\lambda$ in a range of the value of $\lambda$ from 1 to N.

According to this calibration curve creation device, the calibration curve for deriving a target component amount contained in the test object from the observation data of the test object is created on the basis of the observation data and the content of the target component acquired from each sample for a plurality of samples of the test object. For this reason, if the calibration curve is used, it is possible to obtain the content of the target component with high accuracy even if only a single observation data item of the test object is used. Therefore, if a calibration curve is created in advance according to the calibration curve creation method, a single observation data item has only to be obtained for a test object during calibration. As a result, a target component amount can be obtained with high accuracy on the basis of a single observation data item which is an actually measured value. Since the estimated mixing matrix is obtained, and a vector having the strong correlation with a content of the target component of the sample is extracted from the estimated mixing matrix, it is possible to obtain a mixing coefficient having high estimation accuracy. In the first preprocess, since the process based on the PNS is performed, it is possible to reduce the influence of a baseline variation included in the observation data and thus to increase calibration accuracy.

(3) A third aspect of the invention provides a target component calibration method of obtaining a content of a target component for a test object. The target component calibration method includes obtaining a mixing coefficient corresponding to the target component for the test object on the basis of observation data for the test object and calibration data, and, in this case, a first preprocess including normalization of the observation data, and a second preprocess including whitening are performed in this order. In the first preprocess, the normalization is performed after a process based on project on null space (PNS) is performed. In the PNS, as a single-variable function representing a variation which depends on an ordinal number $\lambda$ (where $\lambda$ is an integer from 1 to N) of a data length N of the observation data, not a power function of $\lambda$ with an exponent of an integer but a single-variable function which monotonously increases according to an increase in $\lambda$ in a range of the value of $\lambda$ from 1 to N is used.

In this target component calibration method, since, in the PNS, not a power function of $\lambda$ with an exponent of an integer but a single-variable function which monotonously increases according to an increase in $\lambda$ in a range of the value of $\lambda$ from 1 to N is used, it is possible to reduce the influence of a baseline variation included in the observation data more than in the related art and thus to increase calibration accuracy.

In one embodiment, the target component calibration method includes (a) causing a computer to acquire observation data for the test object; (b) causing the computer to acquire calibration data including at least an independent component corresponding to the target component; (c) causing the computer to obtain a mixing coefficient corresponding to the target component for the test object on the basis of the observation data for the test object and the calibration data; and (d) causing the computer to calculate the content of the target component on the basis of a constant of a regression formula, prepared in advance, indicating a relationship between a mixing coefficient corresponding to the target component and a content, and the mixing coefficient obtained in (c). In (c), the computer performs a first preprocess including normalization of the observation data, and a second preprocess including whitening in this order, and, in the first preprocess, the computer performs the normalization after a process based on project on null space (PNS) is performed. In the PNS, the computer uses, as a single-variable function representing a variation which depends on an ordinal number $\lambda$ (where $\lambda$ is an integer from 1 to N) of a data length N of the observation data, not a power function of $\lambda$ with an exponent of an integer but a single-variable function which monotonously increases according to an increase in $\lambda$ in a range of the value of $\lambda$ from 1 to N.

In this target component calibration method, it is possible to obtain the content of the target component for the test object with high accuracy if a single observation data item of the test object has only to be obtained. In the first preprocess, since the process based on the PNS is performed, it is possible to reduce the influence of a baseline variation included in the observation data and thus to increase calibration accuracy.

(4) A fourth aspect of the invention provides a target component calibration device which obtains a content of a target component for a test object. The target component calibration device includes a mixing coefficient calculation section that obtains a mixing coefficient corresponding to the target component for the test object. The mixing coefficient calculation section performs a first preprocess including normalization of the observation data, and a second preprocess including whitening in this order, and, in the first preprocess, the mixing coefficient calculation section performs the normalization after a process based on project on null space (PNS) is performed. In the PNS, the mixing coefficient calculation section uses, as a single-variable function representing a variation which depends on an ordinal number $\lambda$ (where $\lambda$ is an integer from 1 to N) of a data length N of the observation data, not a power function of $\lambda$ with an exponent of an integer but a single-variable function which monotonously increases according to an increase in $\lambda$ in a range of the value of $\lambda$ from 1 to N.

In this target component calibration device, since, in the PNS, not a power function of $\lambda$ with an exponent of an integer but a single-variable function which monotonously increases according to an increase in $\lambda$ in a range of the value of $\lambda$ from 1 to N is used, it is possible to reduce the influence of a baseline variation included in the observation data more than in the related art and thus to increase calibration accuracy.

In one embodiment, the target component calibration device includes a test object observation data acquisition section that acquires observation data for the test object; a calibration data acquisition section that acquires calibration data including at least an independent component corresponding to the target component; a mixing coefficient calculation section that obtains a mixing coefficient corresponding to the target component for the test object on the basis of the observation data for the test object and the calibration data; and a target component amount calculation section that calculates the content of the target component on the basis of a constant of a regression formula, prepared in advance, indicating a relationship between a mixing coefficient corresponding to the target component and a content, and the mixing coefficient obtained by the mixing coefficient calculation section. The mixing coefficient calculation section performs a first preprocess including normalization of the observation data, and a second preprocess including whitening in this order. In the first preprocess, the mixing coefficient calculation section performs the normalization after a process based on project on null space (PNS) is performed. In the PNS, the mixing coefficient calculation section uses, as a single-variable function representing a variation which depends on an ordinal number $\lambda$ (where $\lambda$ is an integer from 1 to N) of a data length N of the observation data, not a power function of $\lambda$ with an exponent of an integer but a single-variable function which monotonously increases according to an increase in $\lambda$ in a range of the value of $\lambda$ from 1 to N.

In this target component calibration device, it is possible to obtain the content of the target component for the test object with high accuracy if a single observation data item of the test object has only to be obtained. In the first preprocess, since the process based on the PNS is performed, it is possible to reduce the influence of a baseline variation included in the observation data and thus to increase calibration accuracy.

In the methods or the devices described above, the single-variable function may include a power function of $\lambda$ with an exponent of a non-integer real number. In this case, it is possible to effectively reduce the influence of a baseline variation included in the observation data by using a simple single-variable function and thus to increase calibration accuracy.

In the methods or the devices, a value of the exponent of the power function of $\lambda$ may be a non-integer real number in a range from 0 to 3.0. In this case, it is possible to further reduce the influence of a baseline variation included in the observation data and thus to increase calibration accuracy.

The invention may be implemented in various aspects other than the above-described aspects. For example, the invention may be implemented in aspects such as an electronic apparatus including the above-described device, a computer program for implementing functions of the respective sections of the device, and a non-transitory storage medium which stores the computer program thereon.

BRIEF DESCRIPTION OF THE DRAWINGS

The invention will be described with reference to the accompanying drawings, wherein like numbers reference like elements.

Fig. 1 illustrates the summary of a calibration curve creation process using independent component analysis.
Fig. 2 illustrates the summary of a process of calibrating a target component.
Figs. 3A and 3B are diagrams illustrating examples of various functions which can be used as variations which depend on a wavelength.
Figs. 4A and 4B are graphs illustrating that an exponent $\alpha$ of a power function $\lambda^\alpha$ influences calibration accuracy.
Fig. 5 is a flowchart illustrating a calibration curve creation process.
Fig. 6 is a diagram illustrating a computer which is used for the calibration curve creation process.
Fig. 7 is a functional block diagram illustrating a device used for the calibration curve creation process.
Fig. 8 is a functional block diagram illustrating an example of an internal configuration of an independent component matrix calculation unit.
Fig. 9 is a diagram schematically illustrating a measured data set.
Fig. 10 is a flowchart illustrating a mixing coefficient estimation process.
Fig. 11 is a diagram illustrating an estimated mixing matrix ^A.
Fig. 12 is a flowchart illustrating a regression formula calculation process.
Fig. 13 is a functional block diagram illustrating a device used for a target component calibration process.
Fig. 14 is a flowchart illustrating the target component calibration process.

DESCRIPTION OF EXEMPLARY EMBODIMENTS

Hereinafter, an embodiment of the invention will be described in the following order.

A. Summary of calibration curve creation process and calibration process
B. Project on null space and effect thereof
C. Calibration curve creation method
D. Target component calibration method
E. Various algorithms and influences thereof
F. Modification examples

In the present embodiment, the following abbreviated words are used.

- Independent component analysis (ICA)
- Standard normal variate transformation (SNV)
- Project on null space (PNS)
- Principal components analysis (PCA)
- Factor analysis (FA)

A. Summary of Calibration Curve Creation Process and Calibration Process

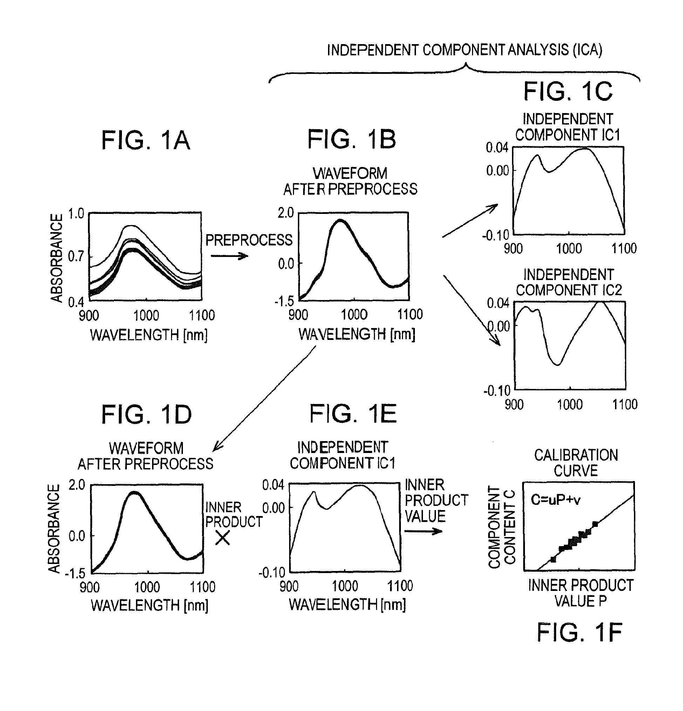

Fig. 1 is a diagram illustrating the summary of a calibration curve creation process using ICA. Fig. 1(A) illustrates an example of observation data (also referred to as "measured data") for a plurality of samples. The observation data is a spectral absorbance, and can be obtained through spectral measurement of a sample containing a plurality of chemical components such as glucose. As a plurality of samples used for the calibration curve creation process, samples are used in which a content of a target component (for example, glucose) is known. Alternatively, a content of a target component contained in a plurality of samples may be measured by using an analysis device.

When a calibration curve is created, first, a preprocess is performed on the observation data so as to reduce a variation or noise included in the observation data (Fig. 1(B)). As the preprocess, for example, first preprocess including normalization of the observation data, and second preprocess including whitening are performed. In the first preprocess, PNS is preferably performed in order to reduce influences due to various variation factors (variations in a sample state or a measurement environment) of the observation data. Next, an independent component analysis process is performed on the observation data having undergone the preprocess, and thus a plurality of independent components IC1, IC2,... (Fig. 1C) is obtained. The independent components IC1, IC2,... are data items corresponding to respective substance components contained in each sample, and are components which are mutually statistically independent components. Observation data of each sample can be reproduced as a linear combination of the independent components IC1, IC2,.... In Fig. 1(C), only two independent components IC1 and IC2 are exemplified, but the number of independent components is set to any number of 2 or greater as appropriate. In the description of the embodiment, the term "target component" indicates a substance or a chemical component contained in a sample, and, on the other hand, the term "independent component" indicates data having the same data length as that of observation data of a sample.

Next, as illustrated in (D) to (F) in Fig. 1, the inner product between the observation data having undergone the preprocess and the independent component (for example, IC1) is calculated. The observation data illustrated in Fig. 1(D) is the same as that illustrated in Fig. 1(B). If the inner product between the single item of observation data and the single independent component IC1 is taken, a single inner product value regarding the observation data can be obtained. Therefore, if the inner product between the same independent component IC1 and a plurality of items of observation data is calculated, a plurality of inner product values for the same independent component IC1 can be obtained with regard to a plurality of samples. Fig. 1(F) is a diagram in which a transverse axis expresses inner product values P regarding a plurality of samples and a longitudinal axis expresses a known content C of a target component. If the independent component IC1 used in the inner product is an independent component corresponding to the target component, as illustrated in Fig. 1 (F), the inner product value P and the content C of the target component of each sample have strong correlation. Therefore, among the plurality of independent components IC1, IC2,... obtained in Fig. 1(C), an independent component showing the strongest correlation can be selected as an independent component corresponding to the target component. In the example illustrated in Fig. 1, the independent component IC1 is an independent component corresponding to a calibration target component (for example, glucose). A calibration curve is expressed as a straight line given by a single regression formula C=uP+v which is plotted in Fig. 1(F). The inner product value P is a value which is proportional to a content of the independent component IC1 of each sample and is thus also referred to as a "mixing coefficient".

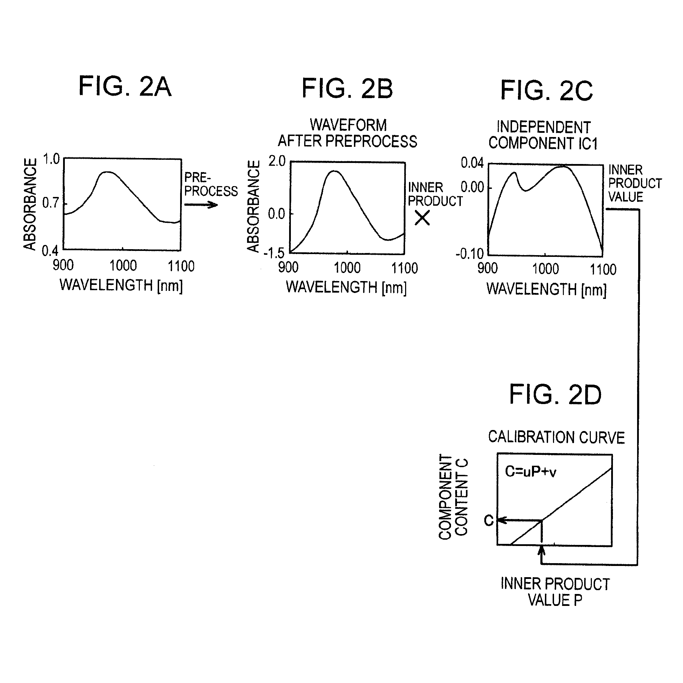

Fig. 2 is a diagram illustrating the summary of a target component calibration process using the calibration curve. The calibration process is performed by using the independent component IC1 (Fig. 1(E)) of the target component and the calibration curve (Fig. 1(F)) obtained through the calibration curve creation process illustrated in Fig. 1. In the calibration process, first, observation data of a sample in which a content of the target component is unknown is acquired (Fig. 2(A)). Next, a preprocess is performed on the observation data (Fig. 2(B)). The preprocess is preferably the same as the preprocess used to create the calibration curve. The inner product between the observation data having undergone the preprocess and the independent component IC1 (Fig. 2(B)) is taken, and an inner product value P regarding the observation data is calculated. A content C of the target component can be determined by applying the inner product value P to the calibration curve (Fig. 2(D)). Details of the calibration curve creation process illustrated in Fig. 1 or the calibration process illustrated in Fig. 2 will be described later.

B. PNS and Effect thereof

Generally, in an ideal system, measured data x (processing object data x) is expressed by the following expression by using m (where m is an integer of 2 or greater) independent components $s_i$ (where i=1 to m) and respective mixing ratios $c_i$.

$$\mathbf{x} = \sum_{i=1}^{m} c_i \mathbf{s}_i$$

$$= A \cdot s \qquad \cdots (1)$$

Here, A is a matrix (mixing matrix) formed of the mixing ratios $c_i$.

Also in the independent component analysis (ICA), a process is performed on the basis of this model. However, various variation factors (variations in a sample state, a measurement environment, and the like) are present in actual measured data. Therefore, as a model considering the factors, a model expressing the measured data x with the following equation may be used.

$$\mathbf{x} = b \sum_{i=1}^{m} c_i \mathbf{s}_i + aE + b_1 f_1(\lambda) + b_2 f_2(\lambda) + \cdots b_g f_g(\lambda) + \varepsilon \qquad \cdots (2)$$

Here, b is a parameter indicating a variation amount of a spectrum in an amplitude direction, a is a parameter indicating an amount of a constant baseline variation E (also referred to as an "average value variation"), $b_1$, ..., and bg are parameters indicating amounts of g (where g is an integer of 1 or greater) variations $f_1(\lambda)$ to $f_g(\lambda)$ which depend on a wavelength, and $\varepsilon$ indicates other variation components. The constant baseline variation E is given by E={1, 1, 1,..., 1}$^T$ (T on the right shoulder indicates transposition), and is a constant vector whose data length is the same as a data length N (which is the number of dividing a wavelength region) of the measured data x. As a variable $\lambda$ indicating a wavelength, N integers from 1 to N are used. In other words, the variable $\lambda$ corresponds to an ordinal number of the data length N (where N is an integer of 2 or greater) of the measured data x. In this case, the variations $f_1(\lambda)$ to $f_g(\lambda)$ which depend on a wavelength are given by variations $f_1(\lambda)$={$f_1(1)$, $f_1(2)$,..., $f_1(N)$}$^T$,..., and $f_g(\lambda)$ ={$f_g(1)$, $f_g(2)$,..., $f_g(N)$}$^T$. Such variations cause errors in the ICA or the calibration and are thus preferably removed in advance.

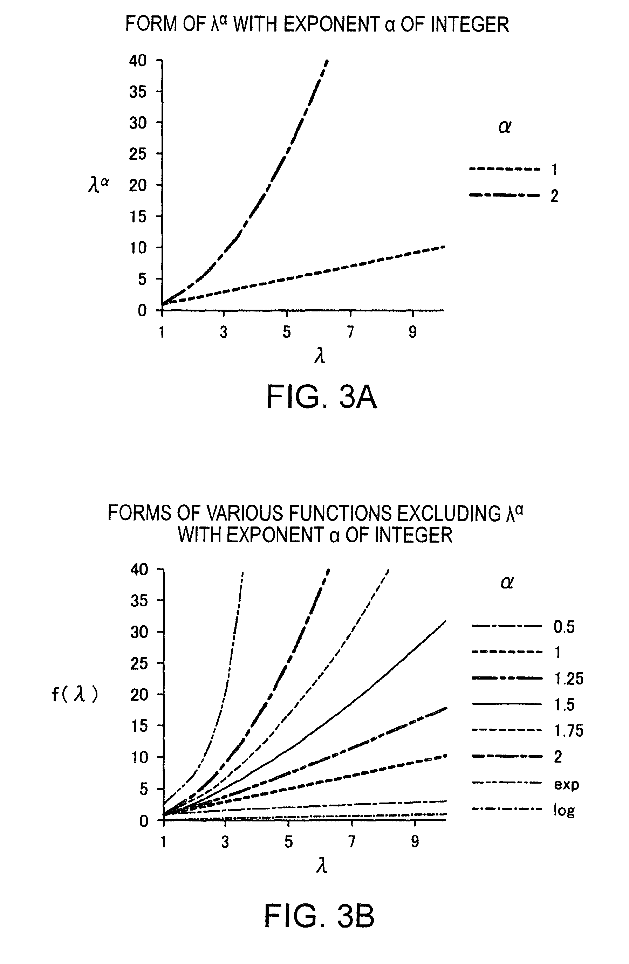

Figs. 3A and 3B are diagrams illustrating examples of various functions which can be used as the variations $f_1(\lambda)$ to $f_g(\lambda)$ which depend on a wavelength. Fig. 3A illustrates a form of the function $\lambda^\alpha$ with the exponent $\alpha$ of an integer. In the PNS of the related art, the function $\lambda^\alpha$ with the exponent $\alpha$ of an integer is generally used. Fig. 3B illustrates forms of various functions f($\lambda$) excluding $\lambda^\alpha$. Fig. 3B illustrates the function $\lambda^\alpha$ with the exponent $\alpha$ of a non-integer real number, the exponential function exp($\lambda$), and the logarithmic function log($\lambda$). Other types of functions f($\lambda$) may be used. However, as the function f($\lambda$), a single-variable function is preferably used in which a value of the function f($\lambda$) monotonously increases in accordance with an increase in $\lambda$ in a range from 1 to N as a value of $\lambda$. As described below, in the PNS, it is possible to further reduce a variation included in measured data by using single-variable functions f($\lambda$) other than the power function $\lambda^\alpha$ with the exponent $\alpha$ of an integer. In the above Equation (2), in a case of using two or more functions f($\lambda$), the function $\lambda^\alpha$ with the exponent $\alpha$ of an integer may be used as a part thereof.

As a method of determining a form of a preferable function f($\lambda$) and the number thereof g, an experimental try-and-error method may be employed, or an existing parameter estimation algorithm (for example, expectation maximization (EM) algorithm) may be used.

In the PNS, a space formed by the above-described baseline variation components E and $f_1(\lambda)$ to $f_g(\lambda)$ is used, and the measured data x is projected onto a space (null space) which does not include the variation components so that data with the baseline variation components E and $f_1(\lambda)$ to $f_g(\lambda)$ reduced can be obtained. As specific calculation, data z having undergone the process using the PNS is calculated by using the following equation.

$$\mathbf{z} = \left(1 - PP^+\right)\mathbf{x} = b \sum_{i=1}^{m} c_i \mathbf{k}_i + \varepsilon^* \qquad \cdots (3)$$

$$P = \left\{1, f_1(\lambda), f_2(\lambda) \cdots f_g(\lambda)\right\}$$

Here, $P^+$ indicates a pseudo-inverse matrix of P. In addition, $k_i$ is a result of projecting the constituent component $s_i$ of Equation (2) onto the null space which does not include the variation components. Further, $\varepsilon^*$ is a result of projecting the variation component $\varepsilon$ of Equation (2) onto the null space.

If normalization (for example, SNV) is performed after the process using the PNS, the influence of the variation amount b of a spectrum in the amplitude direction in Equation (2) can also be removed.

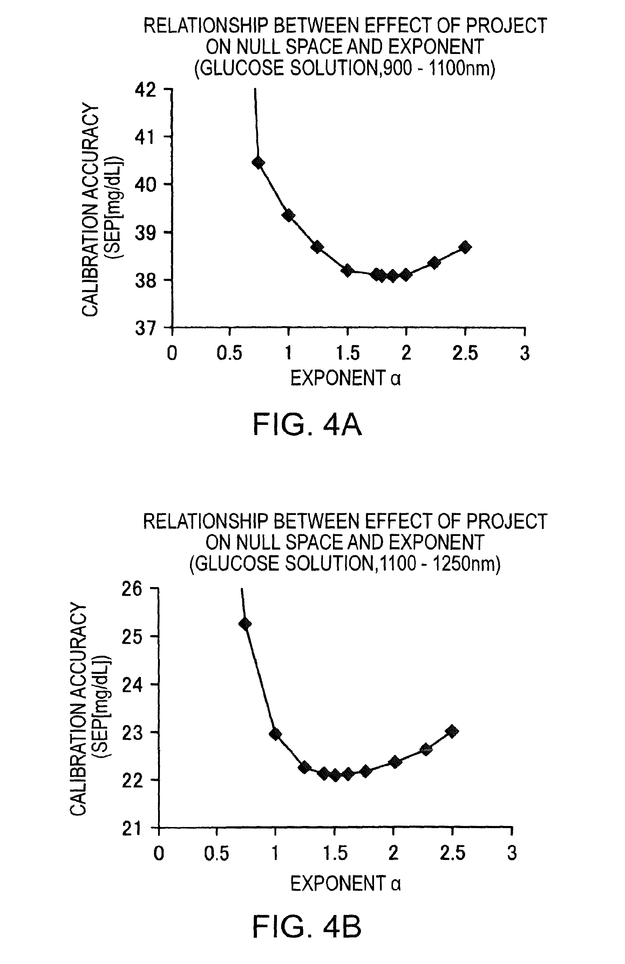

Figs. 4A and 4B are graphs illustrating that the exponent $\alpha$ influences calibration accuracy in a case where the power function $\lambda^\alpha$ is used in the PNS. Figs. 4A and 4B illustrate that only a single power function $\lambda^\alpha$ is used as the g (where g is an integer of 1 or greater) functions $f_1(\lambda)$ to $f_g(\lambda)$ of the above Equation (2), and calibration accuracy is shown in a comparative manner when a value of the exponent $\alpha$ is changed. A used sample is an aqueous solution of glucose. A calibration curve creation process and a calibration process were performed according to the methods described in Figs. 1 and 2. Calibration accuracy SEP is a value of a predicted standard deviation between an actually measured value and a calibrated value, and the unit thereof is a glucose weight per deciliter of the aqueous solution [mg/dL].

Fig. 4A illustrates a result of a case where calibration was performed by using observation data with an absorbance in a range in which a wavelength is 900 nm to 1100 nm, and an independent component. In this example, the calibration accuracy SEP is 39.34 mg/dL at the exponent $\alpha$ of 1, and the calibration accuracy SEP is 38.09 mg/dL at the exponent $\alpha$ of 2. In contrast, the calibration accuracy SEP is the best accuracy at the exponent $\alpha$ of 1.9 and is 38.06 mg/dL.

Fig. 4B illustrates a result of a case where calibration was performed by using observation data with an absorbance in a range in which a wavelength is 1100 nm to 1250 nm, and an independent component. In this example, the calibration accuracy SEP is 22.97 mg/dL at the exponent $\alpha$ of 1, and the calibration accuracy SEP is 22.37 mg/dL at the exponent $\alpha$ of 2. In contrast, the calibration accuracy SEP is the best accuracy at the exponent $\alpha$ of 1.5 and is 22.11 mg/dL.

A non-integer value of 0 or greater may be used as a value of the exponent $\alpha$, but a non-integer value in a range from 0 to 3.0 is preferably used. Of course, a non-integer value of 3.0 or greater may be used. As an example, according to the results illustrated in Figs. 4A and 4B, it can be seen that, as a value of the exponent $\alpha$, a non-integer value in a range from 1.0 to 2.0 is preferably used, and, particularly, a non-integer value in a range from 1.2 to 1.9 is preferably used. The results correspond to a case where the power function $\lambda^\alpha$ of $\lambda$ is used, but even in a case where functions $f(\lambda)$ other than the power function $\lambda^\alpha$ are used, a preferable function form can be appropriately selected by performing tests as illustrated in Figs. 4A and 4B.

As can be seen from the above description, in the PNS, it is possible to improve calibration accuracy by using functions other than the power function $\lambda^\alpha$ with the exponent $\alpha$ of an integer as a function $f(\lambda)$ representing wavelength-dependency in the amplitude direction.

C. Calibration Curve Creation Method

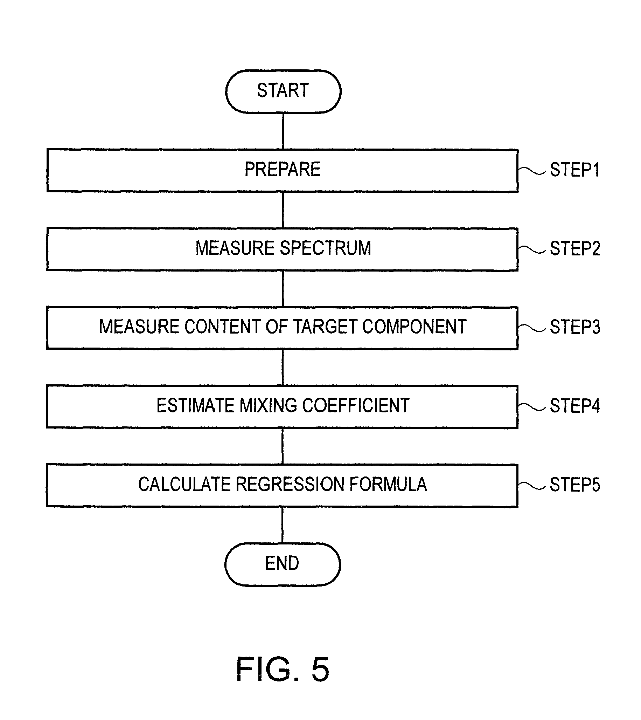

Fig. 5 is a flowchart illustrating a calibration curve creation method as one embodiment of the invention. The calibration curve creation method is constituted of five steps including a step 1 to a step 5. The respective steps 1 to 5 are executed in this order. The respective steps 1 to 5 will be described sequentially.

Step 1

The step 1 is a preparation step, and is executed by a worker. The worker prepares a plurality of samples (for example, a glucose solution or a human body) of the same type, which are different in terms of a content of a target component. In this example, n (where n is an integer of 2 or greater) samples are used.

Step 2

The step 2 is a step of measuring a spectrum, and is executed by the worker using a spectrometer. The worker images each of the plurality of samples prepared in the step 1 with the spectrometer, so as to measure a spectrum of spectral reflectance for each sample. The spectrometer is a well-known apparatus in which light from an object to be measured passes through a spectroscope, and a spectrum output from the spectroscope is received at an imaging surface of an imaging element so that the spectrum is measured. A relationship expressed by the following equation is established between a spectrum of the spectral reflectance and a spectrum of the absorbance.

$$[\text{Absorbance}] = -\log_{10}[\text{Reflectance}] \quad (4)$$

The measured spectrum of the spectral reflectance is converted into the absorbance spectrum by using Equation (4). The reason of the conversion into the absorbance is that linear combination is required to be established in a mixing signal which is analyzed in independent component analysis which will be described later, and the linear combination is established in the absorbance from the Lambert-Beer law. Therefore, in the step 2, the absorbance spectrum may be measured instead of the spectral reflectance spectrum. As a result of the measurement, data regarding an absorbance distribution indicating a wavelength characteristic of the object to be measured is output. The data regarding an absorbance distribution is referred to as spectrum data.

Instead of the spectral reflectance spectrum or the absorbance spectrum being measured with the spectroscope, the spectrum may be estimated from other measured values. For example, a sample may be measured by using a multiband camera, and the spectral reflectance or absorbance spectrum may be estimated from a multi-band image. As such an estimation method, for example, a method disclosed in JP-A-2001-99710 may be used.

Step 3

The step 3 is a step of measuring a content of the target component, and is executed by the worker. The worker chemically analyzes each of the plurality of samples prepared in the step 1, and measures a content (for example, an amount of glucose) of the target component for each sample. In a case where a content of the target component in the sample prepared in the step 1 is known, the step 3 may be omitted.

Step 4

The step 4 is a step of estimating a mixing coefficient, and is generally executed by using a computer.

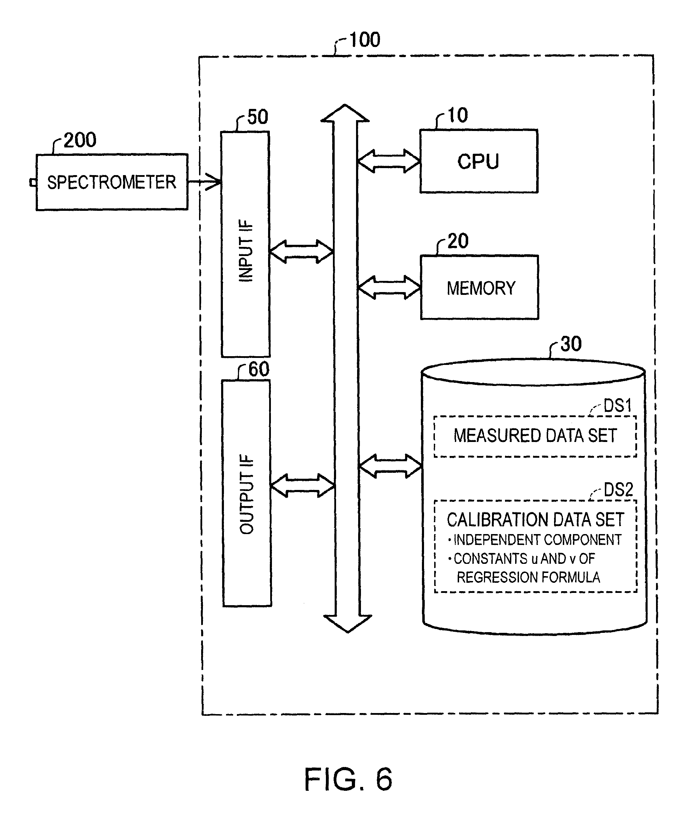

Fig. 6 is a diagram illustrating a computer 100 and peripheral devices thereof used in the step 4 and the step 5 to be described later. The computer 100 is electrically connected to a spectrometer 200.

The computer 100 is a well-known device including a CPU 10 which performs various processes or control by executing a computer program, a memory 20 (storage section) which is a data saving location, a hard disk drive 30 which preserves the computer program or data, an input interface 50, and an output interface 60.

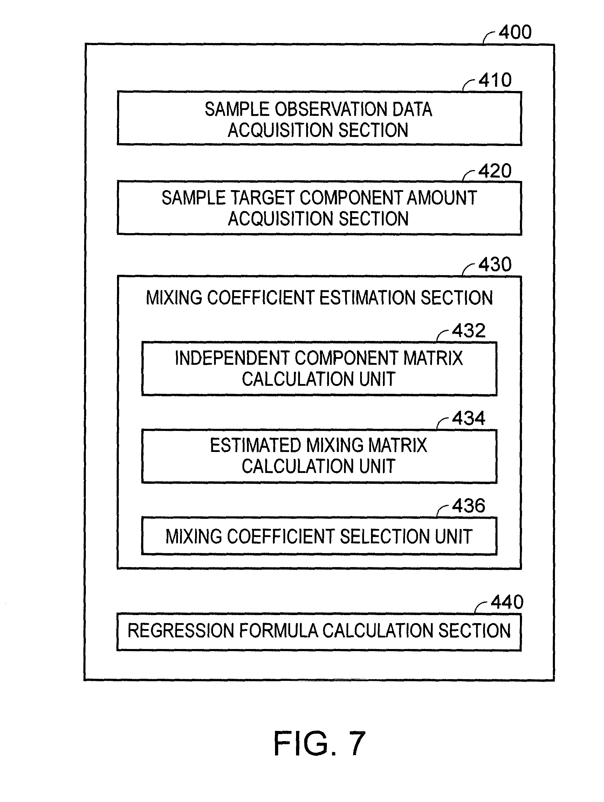

Fig. 7 is a functional block diagram of a device used in the steps 4 and 5. A device 400 includes a sample observation data acquisition section 410, a sample target component amount acquisition section 420, a mixing coefficient estimation section 430, and a regression formula calculation section 440. The mixing coefficient estimation section 430 includes an independent component matrix calculation unit 432, an estimated mixing matrix calculation unit 434, and a mixing coefficient selection unit 436. The sample observation data acquisition section 410 and the sample target component amount acquisition section 420 are implemented, for example, by the CPU 10 illustrated in Fig. 6 cooperating with the input interface 50 and the memory 20. The mixing coefficient estimation section 430, the independent component matrix calculation unit 432, the estimated mixing matrix calculation unit 434, and the mixing coefficient selection unit 436 are implemented, for example, by the CPU 10 illustrated in Fig. 6 cooperating with the memory 20. The regression formula calculation section 440 is implemented, for example, by the CPU 10 illustrated in Fig. 6 cooperating with the memory 20. The respective sections may also be implemented by specific devices or hardware circuits other than the computer illustrated in Fig. 6.

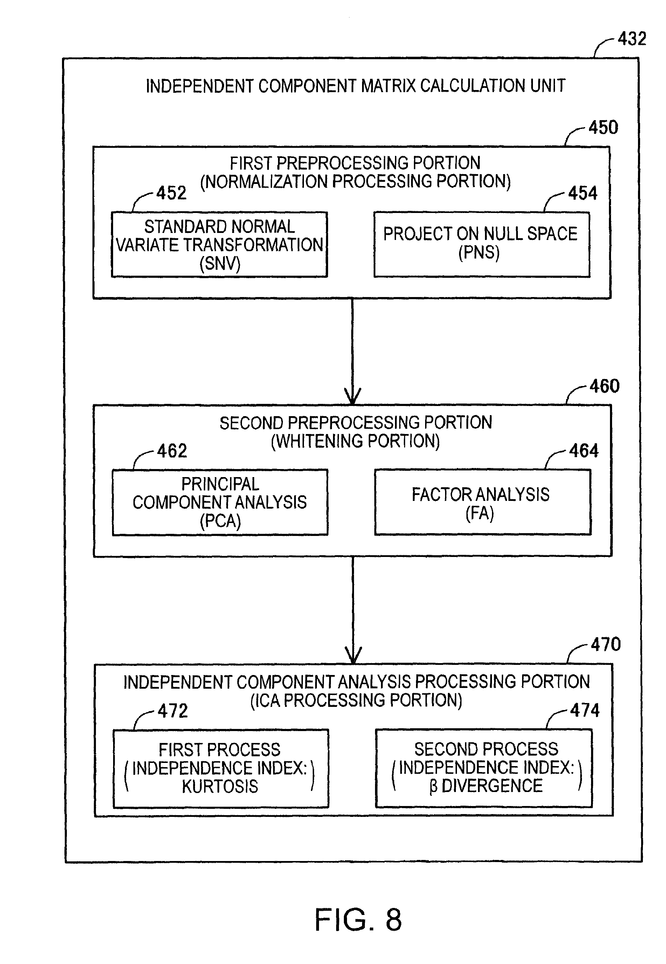

Fig. 8 is a functional block diagram illustrating an example of an internal configuration of the independent component matrix calculation unit 432. The independent component matrix calculation unit 432 includes a first preprocessing portion 450, a second preprocessing portion 460, and an independent component analysis processing portion 470. The three processing portions 450, 460 and 470 process processing object data (in the present embodiment, an absorbance spectrum) in an order thereof so as to obtain an independent component matrix (which will be described later) . The processing content in each portion will be described later.

The spectrometer 200 illustrated in Fig. 6 is used in the step 2. The computer 100 (corresponding to the sample observation data acquisition section 410 illustrated in Fig. 7) acquires the absorbance spectrum which is obtained on the basis of the spectrum distribution measured by the spectrometer 200 in the step 2, as spectrum data via the input interface 50. The computer 100 (corresponding to the sample target component amount acquisition section 420 illustrated in Fig. 7) acquires the content of the target component measured in the step 3 through the worker's operation on a keyboard.

As a result of acquiring the spectrum data and the target component content, a data set (hereinafter, referred to as a "measured data set") DS1 including the spectrum data and the target component content is preserved in the hard disk drive 30 of the computer 100.

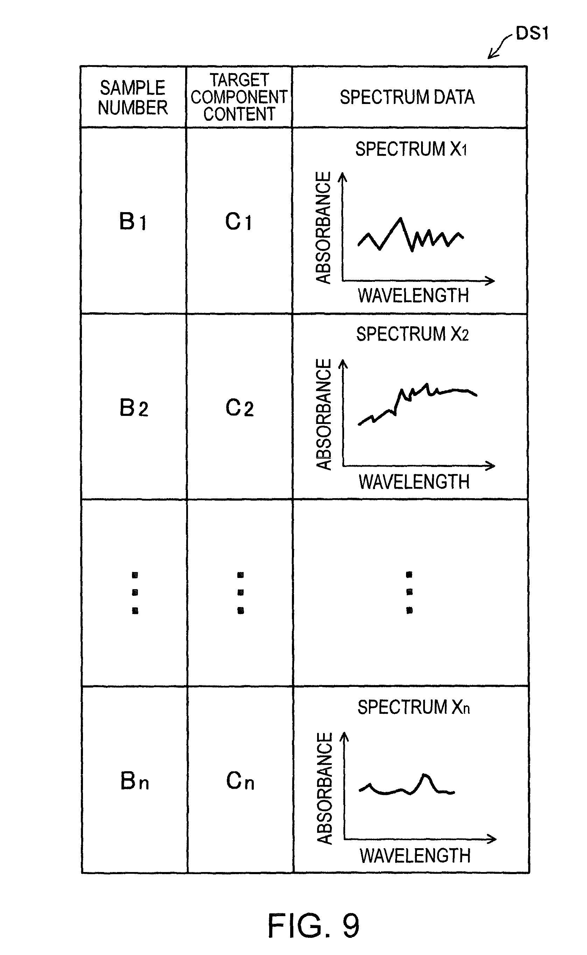

Fig. 9 is a diagram schematically illustrating the measured data set DS1 preserved in the hard disk drive 30. As illustrated in Fig. 9, the measured data set DS1 is a data structure including sample numbers $B_1$, $B_2$, ..., and $B_n$ for identifying the plurality of samples prepared in the step 1, the target component contents $C_1$, $C_2$, ..., and $C_n$ for the respective samples, and spectrum data items $X_1$, $X_2$,..., and $X_n$ for the respective samples. In the measured data set DS1, the target component contents $C_1$, $C_2$,..., and $C_n$, and spectrum data items $X_1$, $X_2$,..., and $X_n$ are correlated with the sample numbers $B_1$, $B_2$, ..., and $B_n$ so that a corresponding sample can be identified.

The CPU 10 loads a predetermined program stored in the hard disk drive 30 to the memory 20, and executes the program so as to perform a process of estimating a mixing coefficient in the step 4. Here, the predetermined program may be downloaded from an external device via a network such as the Internet. In the step 4, the CPU 10 functions as the mixing coefficient estimation section 430 illustrated in Fig. 7.

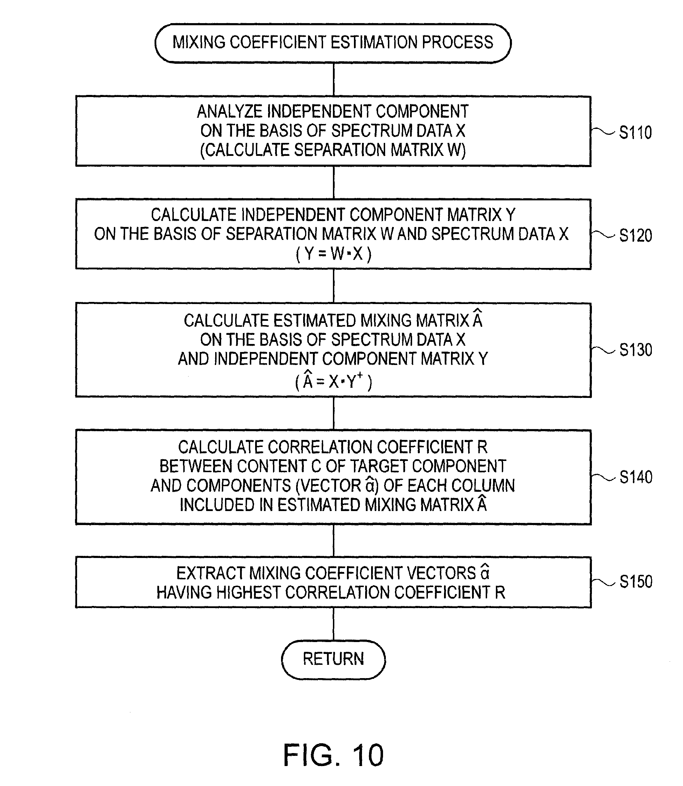

Fig. 10 is a flowchart illustrating a mixing coefficient estimation process performed by the CPU 10. If the process is started, first, the CPU 10 performs independent component analysis (step S110).

The independent component analysis (ICA) is one of multi-dimension signal analysis methods, and is a technique of observing mixed signals in which independent signals overlap each other in several different conditions and separating an independent original signal on the basis thereof. If the independent component analysis is used, the spectrum data obtained in the step 2 is considered to be mixed with m independent components (unknown) including the target component, and thus a spectrum of the independent component can be estimated from the spectrum data (observation data) obtained in the step 2.

In the present embodiment, the independent component analysis is performed by the three processing portions 450, 460 and 470 illustrated in Fig. 8 performing processes in an order thereof. The first preprocessing portion 450 can perform a preprocess using either or both of standard normal variate transformation (SNV) 452 and project on null space (PNS) 454. The SNV 452 is a process in which an average value of processing object data is subtracted, and a subtraction result is divided by a standard deviation thereof so that normalized data with an average value of 0 and a standard deviation of 1 is obtained. The PNS 454 is a process for removing a baseline variation included in the processing object data. In spectrum measurement, a variation between data items called a baseline variation such as an increase or a decrease in an average value of data for each measured data item occurs due to various factors. For this reason, the variation factors are preferably removed before performing the independent component analysis. The PNS can be used as a preprocess capable of removing any baseline variation. The PNS is disclosed in, for example, Zeng-Ping Chen, Julian Morris, and Elaine Martin, "Extracting Chemical Information from Spectral Data with Multiplicative Light Scattering Effects by Optical Path-Length Estimation and Correction", 2006.

In a case where the SNV 452 is performed on the spectrum data obtained in the step 2 of Fig. 5, a process using the PNS 454 is not required to be performed. On the other hand, in a case where a process using the PNS 454 is performed, any subsequent normalization process (for example, the SNV 452) is preferably performed.

As the first preprocess, processes other than SNV or PNS may be performed. In the first preprocess, any normalization process is preferably performed, but the normalization process may be omitted. Hereinafter, the first preprocessing portion 450 is referred to as a "normalization processing portion". The content of the two processes 452 and 454 will be described later more in detail. If processing object data given to the independent component matrix calculation unit 432 is normalized data, the first preprocess may be omitted.

The second preprocessing portion 460 can perform a preprocess using either or both of principal component analysis (PCA) 462 and factor analysis (FA) 464. As the second preprocess, processes other than the PCA or the FA may be used. Hereinafter, the second preprocessing portion 460 is referred to as a "whitening portion". In a general ICA method, as the second preprocess, dimension compression of processing object data and non-correlation are performed. Through the second preprocess, a transformation matrix which is required to be obtained by the ICA is limited to an orthogonal transformation matrix, and thus a calculation amount in the ICA can be reduced. The second preprocess is called "whitening", and the PCA is frequently used. However, in the PCA, if random noise is included in processing object data, an error may occur in a result due to an influence thereof. Therefore, in order to reduce the influence of the random noise, whitening is preferably performed by using the FA with robustness to noise instead of the PCA. The second preprocessing portion 460 illustrated in Fig. 8 can perform whitening by selecting either the PCA or the FA. The content of the two processes 462 and 464 will be described later more in detail. The whitening process may be omitted.

The independent component analysis processing portion (ICA processing portion) 470 performs the ICA on the spectrum data having undergone the first preprocess and the second preprocess so as to estimate a spectrum of the independent component. The ICA processing portion 470 can perform analysis using either a first process 472 using kurtosis as an independence index or a second process 474 using P divergence as an independence index. In the ICA, generally, as an index for separating independent components from each other, high-order statistics indicating independence between separated data items are used as independence index. The kurtosis is a typical independence index. However, in a case where an outlier such as spike noise is included in processing object data, a statistical value including the outlier is also calculated as the independence index. For this reason, an error may occur between an original statistical value of the processing object data and the calculated statistical value, and thus separation accuracy may be reduced.

Therefore, in order to reduce the influence of the outlier in the processing obj ect data, it is preferable to use an independence index which is unlikely to be influenced by the outlier. As an independence index having such a characteristic, $\beta$ divergence may be used. The content of the kurtosis and the $\beta$ divergence will be described later more in detail. As an independence index in the ICA, indexes other than the kurtosis or the $\beta$ divergence may be used.

Hereinafter, the typical processing content of the independent component analysis will be described in detail. It is assumed that spectra S (also referred to as "unknown components" in some cases) of m unknown components (sources) are given by vectors of the following Equation (5), and n spectrum data items X obtained in the step 2 are given by vectors of the following Equation (6). The respective elements ($S_1$, $S_2$,..., $S_m$) included in Equation (5) are vectors (spectra). In other words, the element $S_1$ is expressed as in Equation (7). The elements ($X_1$, $X_2$,..., $X_n$) included in Equation (6) are also vectors, and, for example, the element $X_j$ is expressed as in Equation (8). The subscript j of the element $X_j$ is the number of wavelength bands for measuring a spectrum. The number m of elements of the spectra S of the unknown components is an integer of 1 or greater, and is set in advance empirically or experimentally depending on the type of sample.

$$S = [S_1, S_2, \cdots, S_m]^\mathsf{T} \qquad \cdots (5)$$

$$X = [X_1, X_2, \cdots, X_n]^\mathsf{T} \qquad \cdots (6)$$

$$S_1 = \{S_{11}, S_{12}, \cdots, S_{1l}\} \qquad \cdots (7)$$

$$X_1 = \{X_{11}, X_{12}, \cdots, X_{1l}\} \qquad \cdots (8)$$

The unknown components are statistically independent from each other. A relationship of the following equation is satisfied between the unknown components S and the spectrum data X.

$$X = A \cdot S \qquad \cdots (9)$$

In Equation (9), A is a mixing matrix and may be expressed by the following Equation (10). Also herein, the letter "A" is required to be written in bold type as shown in Equation (10), but is written in a normal letter type due to restriction of letters to be used in the specification. Hereinafter, a bold letter indicating a matrix is written as a normal letter.

$$A = \begin{pmatrix} a_{11} & \cdots & a_{1m} \\ \vdots & \ddots & \vdots \\ a_{n1} & \cdots & a_{nm} \end{pmatrix} \qquad \cdots (10)$$

A mixing coefficient $a_{ij}$ included in the mixing matrix A indicates the extent in which the unknown component $S_j$ (where j=1 to m) contributes to the spectrum data $X_i$ (where i=1 to n) as observation data.

If the mixing matrix A is known, a least square solution of the unknown component S can be easily obtained as $A^+ \cdot X$ by using a pseudo-inverse matrix $A^+$ of A, but, in the present embodiment, since the mixing matrix A is also unknown, the unknown component S and the mixing matrix A are required to be estimated only from the observation data X. In other words, as shown in the following Equation (11), a matrix (hereinafter, referred to as an "independent component matrix") Y indicating a spectrum of the independent component is calculated by using a separation matrix W of mxn elements only on the basis of the observation data X. As an algorithm for obtaining the separation matrix W in the following Equation (11), various methods such as Infomax, fast independent component analysis (Fast ICA), and joint approximate diagonalization of eigenmatrices (JADE) may be employed.

$$Y = W \cdot X \qquad \cdots (11)$$

The independent component matrix Y corresponds to an estimated value of the unknown component S. Therefore, the following Equation (12) can be obtained, and the following Equation (13) can be obtained by modifying Equation (12).

$$X = \hat{A} \cdot Y \qquad \cdots (1\ 2)$$

$$\hat{A} = X \cdot Y^{+} \qquad \cdots (1\ 3)$$

Here, ^A is an estimated mixing matrix of A,
and $Y^{+}$ is a pseudo-inverse matrix of Y.

The estimated mixing matrix ^A (this is written due to the restriction of letters to be used in the specification, but is actually written like the letter with the symbol on the left term of Equation (13); this is also the same for other letters) obtained from Equation (13) may be expressed by the following equation.

$$\hat{A} = \begin{pmatrix} \hat{a}_{11} & \cdots & \hat{a}_{1m} \\ \vdots & \ddots & \vdots \\ \hat{a}_{n1} & \cdots & \hat{a}_{nm} \end{pmatrix} \qquad \cdots (1\ 4)$$

In step S110 of Fig. 10, the CPU 10 performs the process of obtaining the above-described separation matrix W. Specifically, the CPU 10 receives the spectrum data X for each sample which is obtained in the step 2 and is preserved in advance in the hard disk drive 30, as an input, and obtains the separation matrix W by using one of the above-described Informax, Fast ICA, and JADE on the basis of the input. As illustrated in Fig. 8 described above, as preprocesses of the independent component analysis, the normalization process in the first preprocessing portion 450 and the whitening process in the second preprocessing portion 460 are preferably performed.

After step S110 is executed, the CPU 10 performs a process of calculating independent component matrix Y on the basis of the separation matrix W, and the spectrum data X for each sample which is obtained in the step 2 and is preserved in advance in the hard disk drive 30 (step S120). In the calculation process, calculation using the above-described Equation (11) is performed. In the processes in steps S110 and S120, the CPU 10 functions as the independent component matrix calculation unit 432 of Fig. 7.

Next, the CPU 10 performs a process of calculating estimated mixing matrix ^A on the basis of the spectrum data X for each sample which is preserved in advance in the hard disk drive 30 and the independent component matrix Y calculated in step S120 (step S130). In the calculation process, calculation using the above-described Equation (13) is performed.

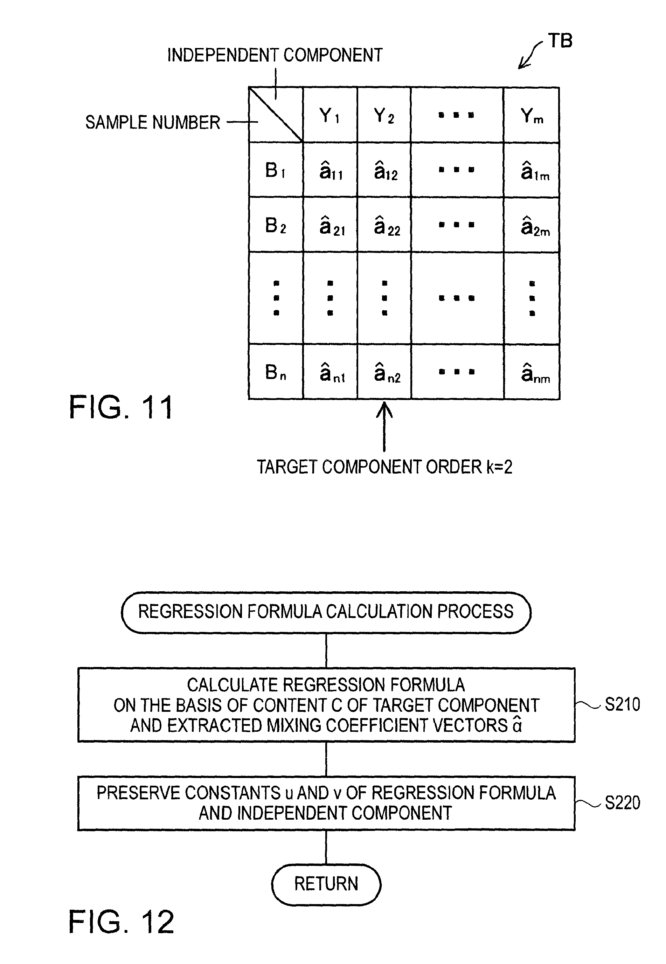

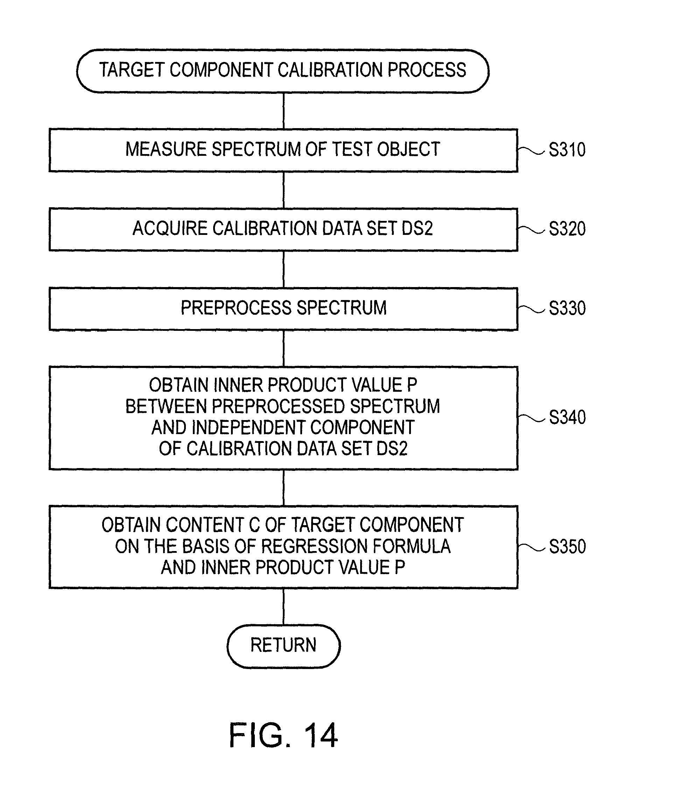

Fig. 11 is a diagram for explaining the estimated mixing matrix ^A. This table TB has sample numbers $B_1$, $B_2$, ..., and $B_n$ in the vertical direction, and elements (hereinafter, referred to as "independent component elements") of $Y_1$, $Y_2$,..., and $Y_m$ of the independent component matrix Y in the horizontal direction. An element of the table TB defined by the sample number $B_i$ (where i=1 to n) and the independent component element $Y_j$ (where j=1 to m) is the same as the element $\hat{a}_{ij}$ (refer to Fig. 14) of the estimated mixing matrix ^A. It can also be seen from this table TB that the element $\hat{a}_{ij}$ of the estimated mixing matrix ^A indicates a ratio of each of the independent component elements $Y_1$, $Y_2$,..., and $Y_m$ in each sample. A target component order k exemplified in Fig. 11 will be described later. In the process in step S130, the CPU 10 functions as the estimated mixing matrix calculation unit 434 illustrated in Fig. 7.

Through the processes up to the process in step S130, the estimated mixing matrix ^A can be obtained. In other words, the element (estimated mixing coefficient) $\hat{a}_{ij}$ of the estimated mixing matrix ^A can be obtained. The estimated mixing coefficient $\hat{a}_{ij}$ corresponds to the inner product value P calculated in (D) to (F) in Fig. 1 in the example illustrated in Fig. 1. Thereafter, the flow proceeds to step S140.

In step S140, the CPU 10 obtains correlations (the extent of similarity) between the target component contents $C_1$, $C_2$,..., and $C_n$ measured in the step 3, and the components (hereinafter, referred to as mixing coefficient vectors ^α) in each column included in the estimated mixing matrix ^A calculated in step S130. Specifically, a correlation between the target component contents C ($C_1$, $C_2$,..., and $C_n$) and the first mixing coefficient vector $^\wedge\alpha_1$ ($\hat{a}_{11}$, $\hat{a}_{21}$,..., and $\hat{a}_{n1}$) is obtained, and then a correlation between the target component contents C ($C_1$, $C_2$,..., and $C_n$) and the second mixing coefficient vector $^\wedge\alpha_2$ ($\hat{a}_{12}$, $\hat{a}_{22}$,..., and $\hat{a}_{n2}$) is obtained. In this way, correlations between the target component contents C and the respective columns are obtained.

As an index indicating the height of the correlation, a correlation coefficient R satisfying the following equation may be used. The correlation coefficient R is called a Pearson product-moment correlation coefficient.

$$R = \frac{\sum_{i=1}^{n}(C_i - \overline{C})(\hat{a}_{ik} - \overline{\hat{\alpha}_k})}{\sqrt{\sum_{i=1}^{n}(C_i - \overline{C})^2}\sqrt{\sum_{i=1}^{n}(\hat{a}_{ik} - \overline{\hat{\alpha}_k})^2}} \qquad \cdots (15)$$

$\overline{C}$ and $\overline{\hat{\alpha}_k}$ respectively indicate a target component amount and an average value of the elements of the vector $\hat{a}_k$.

As a result of step S140 of Fig. 10, the correlation coefficients $R_j$ (where j=1, 2,..., and m) are obtained for the respective independent components (independent component spectra) $Y_j$. Then, the CPU 10 specifies a coefficient having the highest correlation, that is, a coefficient having a value close to 1, among the correlation coefficients $R_j$ obtained in step S140. A column vector $\hat{\alpha}$ in which the highest correlation coefficient R is obtained is selected from the estimated mixing matrix $\hat{A}$ (step S150).

The selection in step S150 is to select one of a plurality of columns, for example, in the table TB illustrated in Fig. 11. Elements of the selected column are mixing coefficients of an independent component corresponding to the target component. As a result of the selection, a mixing coefficient vector $\hat{\alpha}_k$ ($\hat{a}_{1k}$, $\hat{a}_{2k}$,..., and $\hat{a}_{nk}$) is obtained. Here, k is any one of integers of 1 to m. A value of k may be temporarily preserved in the memory 20 as a target component order indicating which independent component corresponds to a target component. The elements $\hat{a}_{1k}$, $\hat{a}_{2k}$,..., and $\hat{a}_{nk}$ included in the mixing coefficient vector $\hat{\alpha}_k$ correspond to "mixing coefficients corresponding to the target component".

In the example illustrated in Fig. 11, the target component order k=2 indicates a mixing coefficient vector $\hat{\alpha}_2$ = ($\hat{a}_{12}$, $\hat{a}_{22}$,..., and $\hat{a}_{n2}$) corresponding to the independent component $Y_2$. The term "order" in the present specification is used as meaning of a "value indicating a position in a matrix". In the processes in steps S140 and S150, the CPU 10 functions as the mixing coefficient selection unit 436 illustrated in Fig. 7. After step S150 is executed, the CPU 10 finishes the process of calculating the mixing coefficient. As a result, the step 4 is completed, and then the flow proceeds to the step 5.

Step 5

The step 5 is a step of calculating a regression formula, and is executed by using the computer 100 in the same manner as in the step 4. In the step 5, the computer 100 performs a process of calculating a regression formula of the calibration curve. The step 5 may be executed by transferring the data obtained up to the step 4 to another computer or device.

Fig. 12 is a flowchart illustrating a regression formula calculation process performed by the CPU 10 of the computer 100. If the process is started, first, the CPU 10 calculates a regression formula on the basis of the target component contents C ($C_1$, $C_2$,..., and $C_n$) measured in the step 3 and the mixing coefficient vector $\hat{\alpha}_k$ ($\hat{a}_{1k}$, $\hat{a}_{2k}$,..., and $\hat{a}_{nk}$) selected in step S150 (step S210). This regression formula may be expressed by the following equation (16). In step S210, constants u and v in Equation (16) are obtained.

$$C = u \cdot P + v \qquad \cdots (16)$$

Here, C is a target component content, P is an inner product value between measured data and an independent component, and u and v are constants.

After step S210 is executed, the CPU 10 preserves the regression formula constants u and v obtained in step S210 and the independent component $Y_k$ corresponding to the target component order k (Fig. 11) determined in step S150 in the hard disk drive 30 as a calibration data set DS2 (step S220). Thereafter, the CPU 10 proceeds to "return" and temporarily finishes the regression formula calculation process. As a result, the regression formula of the calibration curve can be obtained, and the calibration curve creation method illustrated in Fig. 5 is also finished. In the processes in steps S210 and S220, the CPU 10 functions as the regression formula calculation section 440 illustrated in Fig. 7.

D. Target Component Calibration Method

Next, a target component calibration method will be described. It is assumed that a test object is formed of the same components as those of the sample which is used to create the calibration curve. Specifically, the target component calibration method is performed by using a computer. The computer described here may be the computer 100 used to create the calibration curve, and may be other computers.

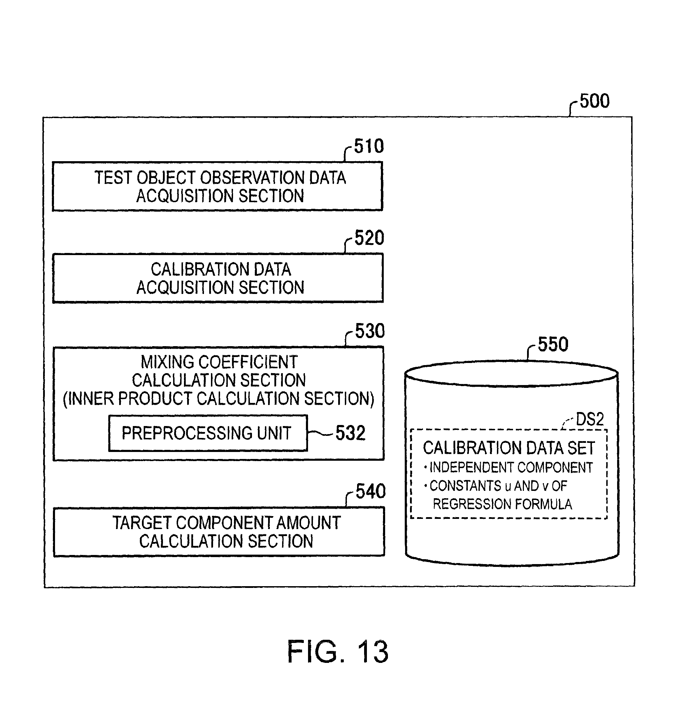

Fig. 13 is a functional block diagram illustrating a device used to calibrate a target component. A device 500 includes a test object observation data acquisition section 510, a calibration data acquisition section 520, a mixing coefficient calculation section 530, a target component amount calculation section 540, and a nonvolatile storage section 550. The mixing coefficient calculation section 530 includes a preprocessing unit 532. The preprocessing unit 532 has both of the functions of the first preprocessing portion 450 and the second preprocessing portion 460 illustrated in Fig. 8. The mixing coefficient calculation section 530 has a function of performing the inner product calculation described in (A) to (C) in Fig. 2 and may thus be referred to as an "inner product calculation section". The test object observation data acquisition section 510 is implemented, for example, by the CPU 10 illustrated in Fig. 6 cooperating with the input interface 50 and the memory 20. The calibration data acquisition section 520 is implemented, for example, by the CPU 10 illustrated in Fig. 6 cooperating with the memory 20 and the hard disk drive 30. The mixing coefficient calculation section 530 and the target component amount calculation section 540 are implemented, for example, by the CPU 10 illustrated in Fig. 6 cooperating with the memory 20. The nonvolatile storage section 550 stores the calibration data set DS2 (the independent components and the constants u and v of the regression formula). The device illustrated in Fig. 13 may be mounted as another device or electronic apparatus which is different from the computer illustrated in Fig. 6. In this case, the device illustrated in Fig. 13 or an electronic apparatus including the device is preferably provided with a spectrometer.

Fig. 14 is a flowchart illustrating a target component calibration process performed by the CPU 10 of the computer 100. The CPU 10 loads a predetermined program stored in the hard disk drive 30 to the memory 20, and executes the program so as to perform the target component calibration process. First, the CPU 10 performs a process of imaging the test object with a spectrometer (step S310). The imaging in step S310 may be performed in the same manner as in the step 2, and, as a result, an absorbance spectrum $X_p$ of the test object is obtained. A model of the spectrometer used in the calibration process is preferably the same as the model of the spectrometer used to create the calibration curve in order to minimize errors. The same spectrometer is more preferably used in order to further minimize errors. In the same manner as in the step 2 of Fig. 5, instead of the spectral reflectance spectrum or the absorbance spectrum being measured with the spectroscope, the spectrum may be estimated from other measured values. The absorbance spectrum $X_p$ of the test object which is obtained when a single test object is imaged once is expressed by a vector as in the following equation.

$$X_p = \{X_{p1}, X_{p2}, \cdots, X_{pl}\} \quad \cdots (17)$$

In the process in step S310, the CPU 10 functions as the test object observation data acquisition section 510 illustrated in Fig. 13. Next, the CPU 10 acquires the calibration data set DS2 from the hard disk drive 30 (the nonvolatile storage section 550 illustrated in Fig. 13) and stores the calibration data set in the memory 20 (step S320). In the process in step S320, the CPU 10 functions as the calibration data acquisition section 520 illustrated in Fig. 13.

After step S320 is executed, a preprocess is performed on the observation data (absorbance spectrum $X_p$) of the test object obtained in step S310 (step S330). As the preprocess, it is preferable to perform the same preprocesses as the preprocesses (that is, the normalization process in the first preprocessing portion 450 and the whitening process in the second preprocessing portion 460) performed in the step 4 (more specifically, step S110 of Fig. 10) of Fig. 5 when the calibration curve is created.

Then, the CPU 10 obtains an inner product value P between the independent component included in the calibration data set DS2 and the spectrum (the observation data having undergone the preprocess) obtained in step S330 (step S340). The process in step S340 corresponds to the processes illustrated in (B) and (C) in Fig. 2. The inner product value P corresponds to the mixing coefficient calculated in step S130 of Fig. 10 when the calibration curve is created. Therefore, the inner product value P is also referred to as a "mixing coefficient".

In the processes in steps S330 and S340, the CPU 10 functions as the mixing coefficient calculation section 530 illustrated in Fig. 13.

Next, the CPU 10 reads the constants u and v of the regression formula included in the calibration data set DS2 from the hard disk drive 30 (the nonvolatile storage section 550 illustrated in Fig. 13), and assigns the constants u and v and the inner product value P obtained in step S340 to the right term of the above Equation (16) so as to obtain a target component content C (step S350). In this case, the constants u and v may be adjusted as necessary. The content C is obtained, for example, as the mass of the target component per unit volume or per unit mass (for example, per dL or per 100 g) of the test object. In the process in step S350, the CPU 10 functions as the target component amount calculation section 540 illustrated in Fig. 13. Then, the CPU 10 proceeds to "return" and finishes the target component calibration process.

In the present embodiment, the content C obtained in step S350 is used as a content of the target component of the test object, but, alternatively, the content C obtained in step S350 may be corrected by using the normalization coefficient which is used for the normalization in step S330, and a corrected value may be used as a content to be obtained. Specifically, an absolute value (gram) of the content may be obtained by multiplying the content C by a standard deviation. With this configuration, the content C can be further increased to the high degree of accuracy depending on the type of target component.

According to the above-described calibration method, a content of the target component can be obtained with high accuracy on the basis of a single spectrum which is an actually measured value for the test object.

E. Various Algorithms and Influences thereof

Hereinafter, a description will be sequentially made of various algorithms used by the first preprocessing portion 450, the second preprocessing portion 460, and the independent component analysis processing portion 470, illustrated in Fig. 8.

E-1. First Preprocess (normalization process using SNV and/or PNS)

As the first preprocess performed by the first preprocessing portion 450, standard normal variate transformation (SNV) and project on null space (PNS) may be used.

The SNV is given by the following equation.

$$z = \frac{x - x_{ave}}{\sigma} \qquad \cdots (18)$$

Here, z is data after being processed, x is processing object data (in the present embodiment, an absorbance spectrum), $x_{ave}$ is an average value of the processing object data x, and $\sigma$ is a standard deviation of the processing object data x. As a result of the SNV, normalized data z with an average value of 0 and a standard deviation of 1 is obtained.

If the PNS is performed, it is possible to reduce a baseline variation included in the processing object data. When the processing object data (in the present embodiment, the absorbance spectrum) is measured, a variation between data items called a baseline variation such as an increase or a decrease in an average value of data for each measured data item occurs due to various factors. For this reason, the variation factors are preferably removed before performing the independent component analysis (ICA). The PNS can be used as a preprocess capable of reducing any baseline variation of the processing object data. Particularly, such a baseline variation is considerable in measured data of an absorbed light spectrum or a reflected light spectrum including an infrared region, and thus there is a great advantage in applying the PNS thereto. Hereinafter, a description will be made of a principle in which a baseline variation included in data (simply, referred to as measured data x) obtained through measurement is removed by using the PNS. As a general example, a description will be made of a case where measured data is an absorbed light spectrum or a reflected light spectrum including an infrared region. However, the PNS is applicable to other types of measured data items (for example, audio data) .

Generally, in an ideal system, measured data x (processing object data x) is expressed by the following expression by using m (where m is an integer of 2 or greater) independent components $s_i$ (where i=1 to m) and respective mixing ratios $c_i$.

$$x = \sum_{i=1}^{m} c_i s_i$$
$$= A \cdot s \qquad \cdots (19)$$

Here, A is a matrix (mixing matrix) formed of the mixing ratios $c_i$.

Also in the independent component analysis (ICA), a process is performed on the basis of this model. However, various variation factors (variations in a sample state, a measurement environment, and the like) are present in actually measured data. Therefore, as a model considering the factors, a model expressing the measured data x with the following equation may be used.

$$x = b\sum_{i=1}^{m} c_i s_i + aE + b_1 f_1(\lambda) + b_2 f_2(\lambda) + \cdots b_g f_g(\lambda) + \varepsilon \quad \cdots (20)$$

Here, b is a parameter indicating a variation amount of a spectrum in an amplitude direction, a is a parameter indicating an amount of a constant baseline variation E (also referred to as an "average value variation"), $b_1$,..., and bg are parameters indicating amounts of g (where g is an integer of 1 or greater) variations $f_1(\lambda)$ to $f_g(\lambda)$ which depend on a wavelength, and $\varepsilon$ indicates other variation components. The constant baseline variation E is given by E={$_1$, 1, 1,..., 1}$^T$ (T on the right shoulder indicates transposition), and is a constant vector whose data length is the same as a data length N (which is the number of dividing a wavelength region) of the measured data x. As a variable $\lambda$ indicating a wavelength, N integers from 1 to N are used. In other words, the variable $\lambda$ corresponds to an ordinal number of the data length N (where N is an integer of 2 or greater) of the measured data x. In this case, the variations $f_1(\lambda)$ to $f_g(\lambda)$ which depend on a wavelength are given by variations $f_1(\lambda)$ = {$f_1(1)$, $f_1(2)$ ,..., $f_1(N)$}$^T$,..., and $f_g(\lambda)$ = {$f_g(1)$, $f_g(2)$,..., $f_g(N)$}$^T$. Such variations cause errors in the ICA or the calibration and are thus preferably removed in advance.

As the function f ($\lambda$), a single-variable function is preferably used in which a value of the function f($\lambda$) monotonously increases in accordance with an increase in $\lambda$ in a range from 1 to N as a value of $\lambda$. In the PNS, it is possible to further reduce a variation included in measured data by using a function other than the power function $\lambda^\alpha$ of $\lambda$ whose exponent $\alpha$ is an integer.

As a method of determining a form of a preferable function f($\lambda$) and the number thereof g, an experimental try-and-error method may be employed, or an existing parameter estimation algorithm (for example, expectation maximization (EM) algorithm) may be used.

In the PNS, a space formed by the above-described baseline variation components E and $f_1(\lambda)$ to $f_g(\lambda)$ is used, and the measured data x is projected onto a space (null space) which does not include the variation components so that data with the baseline variation components E and $f_1(\lambda)$ to $f_g(\lambda)$ reduced can be obtained. As specific calculation, data z having undergone the process using the PNS is calculated by using the following equation.

$$z = \left(1 - PP^+\right)x = b\sum_{i=1}^{m} c_i k_i + \varepsilon^* \quad \cdots (21)$$

$$P = \left\{1, f_1(\lambda), f_2(\lambda) \cdots f_g(\lambda)\right\}$$

Here, $P^+$ indicates a pseudo-inverse matrix of P. In addition, $k_i$ is a result of projecting the constituent component $s_i$ of Equation (20) onto the null space which does not include the variation components. Further, $\varepsilon^*$ is a result of projecting the variation component $\varepsilon$ of Equation (20) onto the null space.

If normalization (for example, SNV) is performed after the process using the PNS, the influence of the variation amount b of a spectrum in the amplitude direction can also be removed.

If the ICA is performed on the data having undergone the preprocess using the PNS, an obtained independent component is the estimated value of the component $k_i$ of Equation (21) and is thus different from a true constituent component $s_i$. However, the mixing ratio $c_i$ does not change from the value in the original Equation (20), and thus does not influence the calibration process (Figs. 2 and 14) using the mixing ratio $c_i$. As mentioned above, if the PNS is performed as a preprocess of the ICA, the true constituent component $s_i$ cannot be obtained through the independent component analysis, and, thus, generally, the PNS is not applied as a preprocess of the ICA. On the other hand, in the present embodiment, even if the PNS is performed as a preprocess of the ICA, the PNS does not influence the calibration process. Therefore, if the PNS is performed as the preprocess, the calibration can be performed with higher accuracy.

Details of the PNS are disclosed in, for example, Zeng-Ping Chen, Julian Morris, and Elaine Martin, "Extracting Chemical Information from Spectral Data with Multiplicative Light Scattering Effects by Optical Path-Length Estimation and Correction", 2006.

E-2. Second Preprocess (whitening process using PCA and/or FA)

As the second preprocess performed by the second preprocessing portion 460, principal component analysis (PCA) and factor analysis (FA) may be used.

In a general ICA method, as the preprocess, dimension compression of processing object data and non-correlation are performed. Through the preprocess, a transformation matrix which is required to be obtained by the ICA is limited to an orthogonal transformation matrix, and thus a calculation amount in the ICA can be reduced. The preprocess is called "whitening", and the PCA is frequently used. Whitening using the PCA is disclosed in detail in, for example, Chapter 6 of Aapo Hyvarinen, Juha Karhumen, and Erkki Oja, "Independent Component Analysis", 2001, John Wiley & Sons, Inc. ("Independent Component Analysis", Feburary 2005, published by Tokyo Denki University Publishing Department).

However, in the PCA, if random noise is included in processing object data, an error may occur in a processing result due to an influence thereof. Therefore, in order to reduce the influence of the random noise, whitening is preferably performed by using the FA with robustness to noise instead of the PCA. Hereinafter, a description will be made of a principle of whitening using the FA.

As described above, generally, in the ICA, a linear mixing model (the above Equation (19)) is assumed in which the processing object data x is represented as a linear sum of the constituent component $s_i$, and the mixing ratio $c_i$ and the constituent component $s_i$ are obtained. However, in many cases, random noise other than the constituent component $s_i$ is added to actual data. Therefore, as a model considering the random noise, a model expressing the measured data x with the following equation may be used.

$$\mathbf{x} = \mathbf{A} \cdot \mathbf{s} + \rho \qquad \cdots (2\,2)$$

Here, $\rho$ is random noise.

A whitening process considering the noise mixing model is performed, and then the ICA is performed so that the mixing matrix A and the independent component $s_i$ can be estimated.

In the FA of the present embodiment, it is assumed that the independent component $s_i$ and the random noise $\rho$ respectively accord with normal distributions N(0,Im) and N(0,$\Sigma$). As generally known, in the normal distribution N(x1, x2), the first parameter x1 indicates an expected value, and the second parameter x2 indicates a standard deviation. In this case, the processing object data x is represented as a linear sum of variables according with the normal distribution, and thus the processing object data x also accords with the normal distribution. Here, if a covariance matrix of the processing object data x is denoted by V[x], a normal distribution with which the processing object data x accords may be expressed as N(0,V[x]). In this case, a likelihood function regarding the covariance matrix V[x] of the processing object data x can be calculated in the following procedure.

First, assuming that the independent components $s_i$ are perpendicular to each other, the covariance matrix V[x] of the processing object data x is calculated by using the following equation.

$$V[\mathbf{x}] = E\left[\mathbf{x}\mathbf{x}^T\right] = \mathbf{A}\mathbf{A}^T + \Sigma \qquad \cdots (2\,3)$$

Here, $\Sigma$ is a covariance matrix of the noise $\rho$.

As mentioned above, the covariance matrix V[x] may be expressed by the mixing matrix A and the covariance matrix $\Sigma$ of the noise. In this case, the log likelihood function L(A,$\Sigma$) is given by the following equation.

$$L(\mathbf{A},\Sigma) = -\frac{n}{2}\left\{ \mathrm{tr}\left(\left(\mathbf{A}\mathbf{A}^T + \Sigma\right)^{-1}\mathbf{C}\right) + \log\left(\det\left(\mathbf{A}\mathbf{A}^T + \Sigma\right)\right) + m\log 2\pi \right\} \quad \cdots (2\,4)$$

Here, n is the number of data items x, m is the number of independent components, the operator tr indicates a trace of the matrix (a sum of diagonal components), and the operator det indicates a determinant. In addition, C is a sample covariance matrix obtained by using the data x and is calculated by using the following equation.

$$\mathbf{C} = \frac{1}{n}\sum_{i=1}^{n} \mathbf{x}_i \mathbf{x}_i^T \qquad \cdots (2\,5)$$

The mixing matrix A and the covariance matrix $\Sigma$ of the noise can be obtained according to a maximum likelihood method using the log likelihood function L(A,E) of the above Equation (24). As the mixing matrix A, a matrix which is not influenced by the random noise $\rho$ of the above Equation (22) much can be obtained. This is a basic principle of the FA.

As an algorithm of the FA, there are various algorithms using algorithms other than the maximum likelihood method. Also in the present embodiment, various types of FA may be used.

Meanwhile, an estimated value which is obtained through the FA is only a value of AAT, and in a case where the mixing matrix A suitable for this value is determined, it is possible to reduce the influence of the random noise and also to implement non-correlation of data. However, since a degree of freedom of rotation remains, a plurality of constituent components $s_i$ can be determined uniquely. On the other hand, the ICA is a process of reducing the degree of freedom of rotation of the plurality of constituent components $s_i$ so that the plurality of constituent components $s_i$ are perpendicular to each other. Therefore, in the present embodiment, the arbitrariness of the remaining rotation is specified through the ICA by using a value of the mixing matrix A obtained through the FA as a whitened matrix. Consequently, after the whitening process which is robust to the random noise is performed, the ICA is performed, and thus the independent constituent components $s_i$ which are perpendicular to each other can be determined. As a result of the process, the influence of the random noise can be reduced, and calibration accuracy regarding the constituent components $s_i$ can be improved.

E-3. ICA (kurtosis and $\beta$ divergence as independence indexes)

In the ICA, generally, as an index for separating independent components from each other, high-order statistics indicating independence between separated data items are used as independence index. The kurtosis is a typical independence index. The ICA using the kurtosis as an independence index is disclosed in detail in, for example, Chapter 8 of Aapo Hyvarinen, Juha Karhumen, Erkki Oja, "Independent Component Analysis", 2001, John Wiley & Sons, Inc. ("Independent Component Analysis", February 2005, published by Tokyo Denki University Publishing Department).

However, in a case where an outlier such as spike noise is included in processing object data, a statistical value including the outlier is also calculated as the independence index. For this reason, an error may occur between an original statistical value of the processing object data and the calculated statistical value, and thus separation accuracy may be reduced. Therefore, in order to reduce the influence of the outlier in the processing object data, it is preferable to use an independence index which is unlikely to be influenced by the outlier. As an independence index having such a characteristic, $\beta$ divergence may be used. Hereinafter, a description will be made of a principle of the $\beta$ divergence as an independence index in the ICA will be described.

As described above, generally, in the ICA, a linear mixing model (the above Equation (19)) is assumed in which the processing object data x is represented as a linear sum of the constituent component $s_i$, and the mixing ratio $c_i$ and the constituent component $s_i$ are obtained. An estimated value y of the constituent component s obtained through the ICA is expressed as y=W·y by using the separation matrix W. In this case, the separation matrix W is preferably an inverse matrix of the mixing matrix A.

Here, a log likelihood function L(^W) of the estimated value ^W of the separation matrix W may be expressed by the following equation.

$$L\left(\hat{\mathbf{W}}\right)=\frac{1}{N}\sum_{t=1}^{N}l\left(\mathbf{x}(t),\hat{\mathbf{W}}\right) \quad \cdots (2\,6)$$

Here, the element of the summation symbol $\Sigma$ is log likelihood at each data point x(t). This log likelihood function L(^W) can be used as an independence index in the ICA. The $\beta$ divergence method is a method of transforming the log likelihood function L(^W) so that the influence of the outlier such as spike noise in data is minimized by applying an appropriate function to the log likelihood function L(^W).

In a case where the $\beta$ divergence is used as an independence index, first, the log likelihood function L(^W) is transformed according to the following equation by using a function $\Phi_\beta$ which is selected in advance.

$$L_\Phi\left(\hat{\mathbf{W}}\right)=\frac{1}{N}\sum_{t=1}^{N}\Phi_\beta\left(l\left(\mathbf{x}(t),\hat{\mathbf{W}}\right)\right) \quad \cdots (2\,7)$$

The function $L_\Phi$(^W) is treated as a new likelihood function.

As the function $\Phi_\beta$ for reducing the influence of the outlier such as the spike noise, a function may be used in which a value of the function $\Phi_\beta$ exponentially attenuates as a value (a value in the parenthesis of the function $\Phi_\beta$) of log likelihood decreases. As the function $\Phi_\beta$, for example, the following functions may be used.

$$\Phi_\beta(z) = \frac{1}{\beta}\{\exp(\beta z) - 1\} \qquad \cdots \ (28)$$

In this function, as a value of $\beta$ increases, a function value for each data point z (the log likelihood in the above Equation (27)) decreases. A value of $\beta$ can be experimentally determined, and may be set to, for example, about 0.1. The function $\Phi_\beta$ is not limited to the function shown in Equation (28), and other functions may be used in which, as a value of $\beta$ increases, a function value for each data point z decreases.

If such $\beta$ divergence is used as an independence index, it is possible to appropriately minimize the influence of the outlier such as the spike noise. In a case of the likelihood function $L_\Phi(W)$ as shown in the above Equation (27), the $\beta$ divergence is a pseudo-distance between probability distributions which is minimized in accordance with the maximization of the likelihood. If the ICA using the $\beta$ divergence as an independence index is performed, it is possible to reduce the influence of the outlier such as the spike noise and thus to improve calibration accuracy regarding the constituent component $s_i$.

The ICA using the $\beta$ divergence is disclosed in, for example, Minami Mihoko, Shinto Eguchi, "Robust Blind Source Separation by $\beta$-Divergence", 2002.

F. Modification Examples

The invention is not limited to the above-described embodiment or alternations thereof, and can be implemented in various aspects within the scope without departing from the spirit of the invention and may be modified as follows, for example.

Modification Example 1

In the above-described embodiment, the number m of elements of the spectra S of the unknown components is set in advance empirically or experimentally, but the number m of elements of the spectra S of the unknown components may be set on the basis of an information amount criterion called Minimum Description Length (MDL) or Akaike Information Criteria (AIC) . In a case of using MDL or the like, the number m of elements of the spectra S of the unknown components can be automatically set through calculation on the basis of observation data of a sample. MDL is disclosed in, for example, "Independent component analysis for noisy data-MEG data analysis 2000".

Modification Example 2

In the above-described embodiment, a test object as an object of the calibration process is formed of the same components as those of the sample which is used to create the calibration curve, but unknown components other than the same components of the sample used to create the calibration curve may be contained in the test object. Since the inner product between independent components is assumed to be 0, the inner product with an independent component corresponding to the unknown component is also 0, and thus the influence of the unknown component can be disregarded in a case of obtaining a mixing coefficient by using the inner product.

Modification Example 3

The computer used in the above-described embodiment may be configured of a dedicated device. For example, the device illustrated in Fig. 7 or Fig. 13 may be implemented only by hardware circuits. Alternatively, some of the functions of the device illustrated in Fig. 7 or Fig. 13 may be implemented by hardware circuits, and the other functions may be implemented by software.

Modification Example 4

In the above-described embodiment, as an input of a spectrum of spectral reflectance for a sample or a test object, a spectrum measured by the spectrometer is input, but the invention is not limited thereto. For example, a spectrum is estimated on the basis of a plurality of band images in which wavelength bands are different from each other, and the spectrum may be input. For example, a multi-band camera including a filter which can change a transmission wavelength band images a sample or a test object so that the band images can be obtained.

Among the constituent elements in the above-described embodiment and modification examples, elements other than elements disclosed in the independent claims are additional elements and may be omitted as appropriate.

**Claims**

1. A calibration curve creation method of creating a calibration curve used to derive a content of a target component for a test object from observation data of the test object, the method comprising:

   (a) causing a computer to acquire the observation data for a plurality of samples of the test object;
   (b) causing the computer to acquire a content of the target component for each sample;
   (c) causing the computer to estimate a plurality of independent components obtained when the observation data of each sample is separated into the plurality of independent components, and to obtain a mixing coefficient corresponding to the target component for each sample on the basis of the plurality of independent components; and
   (d) causing the computer to obtain a regression formula of the calibration curve on the basis of the content of the target component of the plurality of samples and the mixing coefficient for each sample,
   wherein (c) includes

   (i) causing the computer to obtain an independent component matrix including the independent components of each sample;
   (ii) causing the computer to obtain an estimated mixing matrix indicating a set of vectors for defining a ratio of an independent component element for each independent component in each sample on the basis of the independent component matrix; and
   (iii) causing the computer to obtain a correlation of the content of the target component of the plurality of samples for each vector included in the estimated mixing matrix, and to select the vector which is determined as having the highest correlation as a mixing coefficient corresponding to the target component,

   wherein, in (i), the computer obtains the independent component matrix by performing a first preprocess including normalization of the observation data, a second preprocess including whitening, and independent component analysis in this order,
   wherein, in the first preprocess, the computer performs the normalization after a process based on proj ect on null space (PNS) is performed, and
   wherein, in the PNS, the computer uses, as a single-variable function representing a variation which depends on an ordinal number $\lambda$ of a data length N of the observation data, where $\lambda$ is an integer from 1 to N, not a power function of $\lambda$ with an exponent of an integer but a single-variable function which monotonously increases according to an increase in $\lambda$ in a range of the value of $\lambda$ from 1 to N.

2. The calibration curve creation method according to claim 1,
   wherein the single-variable function includes a power function of $\lambda$ with an exponent of a non-integer real number.

3. The calibration curve creation method according to claim 2,
   wherein a value of the exponent of the power function of $\lambda$ is a non-integer real number in a range from 0 to 3.0.

4. A calibration curve creation device which is configured to create a calibration curve used to derive a content of a target component for a test object from observation data of the test object, the device comprising:

   a sample observation data acquisition section that is configured to acquire the observation data for a plurality of samples of the test object;
   a sample target component amount acquisition section that is configured to acquire a content of the target component for each sample;
   a mixing coefficient estimation section that is configured to estimate a plurality of independent components obtained when the observation data of each sample is separated into the plurality of independent components, and to obtain a mixing coefficient corresponding to the target component for each sample on the basis of the plurality of independent components; and
   a regression formula calculation section that is configured to obtain a regression formula of the calibration curve on the basis of the content of the target component of the plurality of samples and the mixing coefficient for each sample,
   wherein the mixing coefficient estimation section includes
   an independent component matrix calculation unit that is configured to obtain an independent component matrix including the independent components of each sample;
   an estimated mixing matrix calculation unit that is configured to obtain an estimated mixing matrix indicating a set of vectors for defining a ratio of an independent component element for each independent component in each sample on the basis of the independent component matrix; and

a mixing coefficient selection unit that is configured to obtain a correlation of the content of the target component of the plurality of samples for each vector included in the estimated mixing matrix, and to select the vector which is determined as having the highest correlation as a mixing coefficient corresponding to the target component, wherein the independent component matrix calculation unit is configured to obtain the independent component matrix by performing a first preprocess including normalization of the observation data, a second preprocess including whitening, and independent component analysis in this order,

wherein, in the first preprocess, the independent component matrix calculation unit performs the normalization after a process based on project on null space (PNS) is performed, and

wherein, in the PNS, the independent component matrix calculation unit uses, as a single-variable function representing a variation which depends on an ordinal number $\lambda$ of a data length N of the observation data, where $\lambda$ is an integer from 1 to N, not a power function of $\lambda$ with an exponent of an integer but a single-variable function which monotonously increases according to an increase in $\lambda$ in a range of the value of $\lambda$ from 1 to N.

5. The calibration curve creation device according to claim 4,
   wherein the single-variable function includes a power function of $\lambda$ with an exponent of a non-integer real number.

6. The calibration curve creation device according to claim 5,
   wherein a value of the exponent of the power function of $\lambda$ is a non-integer real number in a range from 0 to 3.0.

7. A target component calibration method of obtaining a content of a target component for a test object, the method comprising:

   (a) causing a computer to acquire observation data for the test object;
   (b) causing the computer to acquire calibration data including at least an independent component corresponding to the target component;
   (c) causing the computer to obtain a mixing coefficient corresponding to the target component for the test object on the basis of the observation data for the test object and the calibration data; and
   (d) causing the computer to calculate the content of the target component on the basis of a constant of a regression formula, prepared in advance, indicating a relationship between a mixing coefficient corresponding to the target component and a content, and the mixing coefficient obtained in (c),
   wherein, in (c), the computer performs a first preprocess including normalization of the observation data, and a second preprocess including whitening in this order,
   wherein, in the first preprocess, the computer performs the normalization after a process based on project on null space (PNS) is performed, and
   wherein, in the PNS, the computer uses, as a single-variable function representing a variation which depends on an ordinal number $\lambda$ of a data length N of the observation data, where $\lambda$ is an integer from 1 to N, not a power function of $\lambda$ with an exponent of an integer but a single-variable function which monotonously increases according to an increase in $\lambda$ in a range of the value of $\lambda$ from 1 to N.

8. The target component calibration method according to claim 7,
   wherein the single-variable function includes a power function of $\lambda$ with an exponent of a non-integer real number.

9. A target component calibration device which is configured to obtain a content of a target component for a test object, the device comprising:

   a test object observation data acquisition section that is configured to acquire observation data for the test object;
   a calibration data acquisition section that is configured to acquire calibration data including at least an independent component corresponding to the target component;
   a mixing coefficient calculation section that is configured to obtain a mixing coefficient corresponding to the target component for the test object on the basis of the observation data for the test object and the calibration data; and
   a target component amount calculation section that is configured to calculate the content of the target component on the basis of a constant of a regression formula, prepared in advance, indicating a relationship between a mixing coefficient corresponding to the target component and a content, and the mixing coefficient obtained by the mixing coefficient calculation section,
   wherein the mixing coefficient calculation section is configured to perform a first preprocess including normalization of the observation data, and a second preprocess including whitening in this order,

wherein, in the first preprocess, the mixing coefficient calculation section performs the normalization after a process based on project on null space (PNS) is performed, and

wherein, in the PNS, the mixing coefficient calculation section uses, as a single-variable function representing a variation which depends on an ordinal number $\lambda$ of a data length N of the observation data, where $\lambda$ is an integer from 1 to N, not a power function of $\lambda$ with an exponent of an integer but a single-variable function which monotonously increases according to an increase in $\lambda$ in a range of the value of $\lambda$ from 1 to N.

**10.** The target component calibration device according to claim 9,
wherein the single-variable function includes a power function of $\lambda$ with an exponent of a non-integer real number.

**11.** The target component calibration device according to claim 10,
wherein a value of the exponent of the power function of $\lambda$ is a non-integer real number in a range from 0 to 3.0.

**12.** An electronic apparatus comprising the target component calibration device according to any one of claims 9 to 11.

INDEPENDENT COMPONENT ANALYSIS (ICA)

FIG. 1A

FIG. 1B

FIG. 1C

FIG. 1D

FIG. 1E

FIG. 1F

# FIG. 2A

# FIG. 2B

WAVEFORM
AFTER PREPROCESS

# FIG. 2C

INDEPENDENT
COMPONENT IC1

PRE-
PROCESS →

INNER
PRODUCT
×

INNER
PRODUCT
VALUE

# FIG. 2D

CALIBRATION CURVE

$C = uP + v$

INNER PRODUCT
VALUE P

FORM OF $\lambda^\alpha$ WITH EXPONENT α OF INTEGER

FIG. 3A

FORMS OF VARIOUS FUNCTIONS EXCLUDING $\lambda^\alpha$
WITH EXPONENT α OF INTEGER

FIG. 3B

RELATIONSHIP BETWEEN EFFECT OF PROJECT
ON NULL SPACE AND EXPONENT
(GLUCOSE SOLUTION,900 - 1100nm)

FIG. 4A

RELATIONSHIP BETWEEN EFFECT OF PROJECT
ON NULL SPACE AND EXPONENT
(GLUCOSE SOLUTION,1100 - 1250nm)

FIG. 4B

```
                    ┌─────────────┐
                    │    START    │
                    └──────┬──────┘
                           │
      ┌────────────────────┴────────────────────┐
      │                PREPARE                   │──── STEP1
      └────────────────────┬────────────────────┘
                           │
      ┌────────────────────┴────────────────────┐
      │            MEASURE SPECTRUM              │──── STEP2
      └────────────────────┬────────────────────┘
                           │
      ┌────────────────────┴────────────────────┐
      │   MEASURE CONTENT OF TARGET COMPONENT    │──── STEP3
      └────────────────────┬────────────────────┘
                           │
      ┌────────────────────┴────────────────────┐
      │        ESTIMATE MIXING COEFFICIENT       │──── STEP4
      └────────────────────┬────────────────────┘
                           │
      ┌────────────────────┴────────────────────┐
      │       CALCULATE REGRESSION FORMULA       │──── STEP5
      └────────────────────┬────────────────────┘
                           │
                    ┌──────┴──────┐
                    │     END     │
                    └─────────────┘
```

# FIG. 5

FIG. 6

400

410

SAMPLE OBSERVATION DATA
ACQUISITION SECTION

420

SAMPLE TARGET COMPONENT AMOUNT
ACQUISITION SECTION

430

MIXING COEFFICIENT ESTIMATION SECTION

432

INDEPENDENT COMPONENT MATRIX
CALCULATION UNIT

434

ESTIMATED MIXING MATRIX
CALCULATION UNIT

436

MIXING COEFFICIENT SELECTION UNIT

440

REGRESSION FORMULA CALCULATION SECTION

FIG. 7

FIG. 8

DS1

| SAMPLE NUMBER | TARGET COMPONENT CONTENT | SPECTRUM DATA |
|---|---|---|
| B1 | C1 | SPECTRUM X1 |
| B2 | C2 | SPECTRUM X2 |
| ⋮ | ⋮ | ⋮ |
| Bn | Cn | SPECTRUM Xn |

FIG. 9

MIXING COEFFICIENT ESTIMATION PROCESS

ANALYZE INDEPENDENT COMPONENT
ON THE BASIS OF SPECTRUM DATA X
(CALCULATE SEPARATION MATRIX W)     ～S110

CALCULATE INDEPENDENT COMPONENT MATRIX Y
ON THE BASIS OF SEPARATION MATRIX W AND SPECTRUM DATA X     ～S120
$( Y = W \cdot X )$

CALCULATE ESTIMATED MIXING MATRIX $\hat{A}$
ON THE BASIS OF SPECTRUM DATA X
AND INDEPENDENT COMPONENT MATRIX Y     ～S130
$( \hat{A} = X \cdot Y^{+} )$

CALCULATE CORRELATION COEFFICIENT R
BETWEEN CONTENT C OF TARGET COMPONENT
AND COMPONENTS (VECTOR $\hat{a}$) OF EACH COLUMN     ～S140
INCLUDED IN ESTIMATED MIXING MATRIX $\hat{A}$

EXTRACT MIXING COEFFICIENT VECTORS $\hat{a}$
HAVING HIGHEST CORRELATION COEFFICIENT R     ～S150

RETURN

FIG. 10

INDEPENDENT COMPONENT

TB

| SAMPLE NUMBER | $Y_1$ | $Y_2$ | $\cdots$ | $Y_m$ |
|---|---|---|---|---|
| $B_1$ | $\hat{a}_{11}$ | $\hat{a}_{12}$ | $\cdots$ | $\hat{a}_{1m}$ |
| $B_2$ | $\hat{a}_{21}$ | $\hat{a}_{22}$ | $\cdots$ | $\hat{a}_{2m}$ |
| $\vdots$ | $\vdots$ | $\vdots$ | $\cdots$ | $\vdots$ |
| $B_n$ | $\hat{a}_{n1}$ | $\hat{a}_{n2}$ | $\cdots$ | $\hat{a}_{nm}$ |

TARGET COMPONENT ORDER k=2

## FIG. 11

REGRESSION FORMULA CALCULATION PROCESS

CALCULATE REGRESSION FORMULA
ON THE BASIS OF CONTENT C OF TARGET COMPONENT
AND EXTRACTED MIXING COEFFICIENT VECTORS â ~S210

PRESERVE CONSTANTS u AND v OF REGRESSION FORMULA
AND INDEPENDENT COMPONENT ~S220

RETURN

## FIG. 12

┌─────────────────────────────────────────────────────────────────────┐ 500
│                                                                       │
│  ┌──────────────────────────────────────────┐ 510                     │
│  │      TEST OBJECT OBSERVATION DATA          │                        │
│  │          ACQUISITION SECTION               │                        │
│  └──────────────────────────────────────────┘                         │
│                                                                       │
│  ┌──────────────────────────────────────────┐ 520                     │
│  │         CALIBRATION DATA                   │                        │
│  │         ACQUISITION SECTION                │                        │
│  └──────────────────────────────────────────┘                         │
│                                                                       │
│  ┌──────────────────────────────────────────┐ 530    550              │
│  │        MIXING COEFFICIENT                  │                        │
│  │        CALCULATION SECTION                 │     ┌──────────────┐    │
│  │ (INNER PRODUCT CALCULATION SECTION)        │     │              │    │
│  │  ┌────────────────────────┐                │     │   DS2        │    │
│  │  │  PREPROCESSING UNIT     │ 532            │     │ CALIBRATION  │    │
│  │  └────────────────────────┘                │     │ DATA SET     │    │
│  └──────────────────────────────────────────┘     │ ·INDEPENDENT │    │
│                                                     │  COMPONENT   │    │
│  ┌──────────────────────────────────────────┐ 540  │ ·CONSTANTS u │    │
│  │      TARGET COMPONENT AMOUNT               │     │  AND v OF    │    │
│  │         CALCULATION SECTION                │     │  REGRESSION  │    │
│  └──────────────────────────────────────────┘     │  FORMULA     │    │
│                                                     └──────────────┘    │
└─────────────────────────────────────────────────────────────────────┘

FIG. 13

TARGET COMPONENT CALIBRATION PROCESS

MEASURE SPECTRUM OF TEST OBJECT — S310

ACQUIRE CALIBRATION DATA SET DS2 — S320

PREPROCESS SPECTRUM — S330

OBTAIN INNER PRODUCT VALUE P
BETWEEN PREPROCESSED SPECTRUM
AND INDEPENDENT COMPONENT
OF CALIBRATION DATA SET DS2 — S340

OBTAIN CONTENT C OF TARGET COMPONENT
ON THE BASIS OF REGRESSION FORMULA
AND INNER PRODUCT VALUE P — S350

RETURN

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013160574 A

- JP 2001099710 A

**Non-patent literature cited in the description**

- **ZENG-PING CHEN ; JULIAN MORRIS ; ELAINE MARTIN.** *Extracting Chemical Information from Spectral Data with Multiplicative Light Scattering Effects by Optical Path-Length Estimation and Correction,* 2006
- **AAPO HYVARINEN ; JUHA KARHUMEN ; ERKKI OJA.** Independent Component Analysis. John Wiley & Sons, Inc, 2001
- Independent Component Analysis. Tokyo Denki University Publishing Department, February 2005
- **MINAMI MIHOKO ; SHINTO EGUCHI.** *Robust Blind Source Separation by $\beta$-Divergence,* 2002
- *Independent component analysis for noisy data-MEG data analysis,* 2000